# EUROPEAN PATENT APPLICATION

(11) **EP 4 580 218 A1**
(43) Date of publication of application: **02.07.2025**
(21) Application number: 23856717.6
(22) Date of filing: 25.08.2023
(51) Int. Cl.: H04W 4/02

(54) **METHOD FOR OPERATING VEHICLE**

(30) Priority: 26.08.2022 CN 202211031204
(71) Applicant: Boe Technology Group Co., Ltd., Beijing 100015 (CN); Beijing BOE Technology Development Co., Ltd., Beijing 100176 (CN)
(72) Inventor: ZHAO, Junjie, Beijing 100176 (CN); SU, Jing, Beijing 100176 (CN); CHEN, Shaobei, Beijing 100176 (CN); FENG, Hongbo, Beijing 100176 (CN)
(74) Representative: Brötz, Helmut
(86) International application number: PCT/CN2023/114868
(87) International publication number: WO 2024/041630

(57) **Abstract**

Disclosed are a method for operating a vehicle, and a corresponding vehicle, mobile terminal, system, computer program product, and electronic device. The method comprises: establishing a communication connection between a vehicle and at least one mobile terminal; determining contactless operation information corresponding to at least one digital vehicle key in the at least one mobile terminal, wherein the contactless operation information comprises one or more of quantity information, position information, and trajectory information; and on the basis of the contactless operation information corresponding to the at least one digital vehicle key, controlling the vehicle to execute a corresponding operation.

## Description

### TECHNICAL FIELD

The present disclosure relates to a field of Internet of Vehicles, in particular to technologies for digital vehicle key. For example, the present disclosure discloses a method for operating a vehicle, and a corresponding vehicle, mobile terminal, system, computer program product, and electronic device.

### BACKGROUND

At present, mobile terminal devices and related technologies have developed rapidly in recent years, in which more and more functions related to one's food, clothing, housing and transportation are carried. At this point, mobile terminal products can be used not only as communication tools, but also as bank cards, transportation cards, smart home control terminals and other functions. The function of mobile terminal device as a vehicle key is one of the hot technologies emerging in recent years, which is also known as digital vehicle key. Unlike a conventional vehicle key, a digital vehicle key does not require any additional physical vehicle key, but only integrates vehicle key functions into a mobile terminal device. Based on security functions such as SE and TEE, technologies such as NFC, Bluetooth and UWB are used to connect mobile phones to vehicles to implement functions such as door opening, starting, and the like of a vehicle. Digital vehicle key is one of the important innovative applications of intelligent networked vehicles. Some of the vehicle manufacturers, mobile terminal manufacturers and OEMs have undertaken to develop solutions for digital vehicle keys.

However, with regard to current solutions for digital vehicle keys, it is required not only for the user to actively perform a large amount of operations, but also for the App customized by car factory to complete too many specific operations, which brings poor usage experiences to consumers. Therefore, it is necessary to improve the current solutions for digital vehicle keys.

### SUMMARY

**In** order to solve the above problems, the present disclosure provides a method for operating a vehicle, and a corresponding vehicle, mobile terminal, system, computer program product, and electronic device, thereby realizing the improvement on the current solutions for digital vehicle keys.

**In** a first aspect, an embodiment of the present disclosure provides a method for operating a vehicle, comprising: establishing a communication connection between the vehicle and at least one mobile terminal; determining senseless operation information corresponding to at least one digital vehicle key in the at least one mobile terminal, wherein the senseless operation information includes one or more of quantity information, location information and trajectory information; and controlling, based on the senseless operation information corresponding to the at least one digital vehicle key, the vehicle to perform a corresponding operation.

In a second aspect, an embodiment of the present disclosure provides a vehicle configured to perform the above method.

In a third aspect, an embodiment of the present disclosure provides a mobile terminal comprising at least one digital vehicle key, the digital vehicle key being configured to interact with a vehicle that performs the above method.

In a fourth aspect, an embodiment of the present disclosure provides a system comprising a vehicle and at least one mobile terminal, wherein the vehicle is configured to perform the above method, and the system is further configured to: establish, by the vehicle, a communication connection with the at least one mobile terminal; determine, by the vehicle, whether a speed of the vehicle exceeds a preset threshold; in response to the vehicle determining that the speed of the vehicle is less than the preset threshold, determine, by the vehicle, a mobile terminal within a preset range from the vehicle among the at least one mobile terminal, and determine quantity information corresponding to at least one digital vehicle key in the mobile terminal within the preset range from the vehicle; in response to the quantity information corresponding to the at least one digital vehicle key in the mobile terminal within the preset range from the vehicle indicating that there is one of the at least one mobile terminal being within the preset range from the vehicle, control the vehicle to turn on a path navigation function or a location reminder function; in response to the quantity information corresponding to the at least one digital vehicle key in the mobile terminal within the preset range from the vehicle indicating that there is none of the at least one mobile terminal being within the preset range from the vehicle, determine number-of-users information corresponding to the at least one digital vehicle key; and in response to the number-of-users information corresponding to the at least one digital vehicle key satisfying a preset number-of-users condition, control the vehicle to perform an operation corresponding to the number-of-users condition.

In a fifth aspect, an embodiment of the present disclosure provides a system comprising a vehicle and at least one mobile terminal, wherein the vehicle is configured to perform the above method, and the system is further configured to: establish, by the vehicle, a communication connection with the at least one mobile terminal; determine, by the vehicle, whether a speed of the vehicle exceeds a preset threshold; in response to the vehicle determining that the speed of the vehicle is less than the preset threshold, determine a mobile terminal within a preset range from the vehicle among the at least one mobile terminal and determine quantity information corresponding to at least one digital vehicle key in the mobile terminal within the preset range from the vehicle by the vehicle; in response to the quantity information corresponding to the at least one digital vehicle key in the mobile terminal within the preset range from the vehicle indicating that there is one of the at least one mobile terminal being within the preset range from the vehicle, control the vehicle to turn on a path navigation function or a location reminder function; in response to the quantity information corresponding to the at least one digital vehicle key in the mobile terminal within the preset range from the vehicle indicating that there is none of the at least one mobile terminal being within the preset range from the vehicle, determine number-of-users information corresponding to the at least one digital vehicle key; and in response to the number-of-users information corresponding to the at least one digital vehicle key satisfying a preset number-of-users condition, control the vehicle to perform an operation corresponding to the number-of-users condition.

In a sixth aspect, an embodiment of the present disclosure provides a system comprising a vehicle and at least one mobile terminal, wherein the vehicle is configured to perform the above method, and the system is further configured to: establish, by the vehicle, a communication connection with the at least one mobile terminal; determine, by the vehicle, location information and trajectory information of at least one digital vehicle key in the at least one mobile terminal; control, in response to the location information and trajectory information of the at least one digital vehicle key indicating that the trajectories of all of the digital vehicle keys are coincident and have the same target positions, the vehicle to perform an operation corresponding to single user; and in response to the location information and trajectory information of the at least one digital vehicle key indicating that a trajectory of at least one of the at least one digital vehicle key is not coincident with the trajectories of other digital vehicle keys or has a different target position, control the vehicle to perform an operation corresponding to multiple users.

In a seventh aspect, an embodiment of the present disclosure provides a system comprising a vehicle and at least one mobile terminal, wherein the vehicle is configured to perform the above method, and the system is further configured to: establish, by the vehicle, a communication connection with the at least one mobile terminal; in response to the vehicle determining that a digital vehicle key of one of the at least one mobile terminal is authenticated, determine, by the vehicle, whether other mobile terminals of the at least one mobile terminal are located within a preset range from the vehicle; in response to the vehicle determining that the other mobile terminals are located within the preset distance from the vehicle, determine quantity information of digital vehicle keys of the other mobile terminals, and determine whether the vehicle turns on a path navigation function or a location reminder function based on the quantity information; and open or turn on, based on the quantity information and trajectory information of the other mobile terminals located within the preset range from the vehicle, a vehicle door, sound field, vehicle window or air conditioner corresponding to the vehicle.

In an eighth aspect, an embodiment of the present disclosure provides a system comprising a vehicle and at least one mobile terminal, wherein the vehicle is configured to perform the above method, and the system is further configured to: establish, by the vehicle, a communication connection with the at least one mobile terminal; determines, by the vehicle, trajectory information of at least one digital vehicle key in the at least one mobile terminal, and determine a duration for which the digital vehicle key is located in an effective connection area of the vehicle based on the trajectory information; and determine, based on the duration for which the digital vehicle key is located in the effective connection area of the vehicle, whether the vehicle turns on a horn and a headlight.

In a ninth aspect, an embodiment of the present disclosure provides an electronic device comprising: one or more processors; and one or more memories, wherein the one or more memories have stored thereon computer executable programs which, when executed by the processors, perform the vehicle security authentication method as described above.

In a tenth aspect, an embodiment of the present disclosure provides a computer-readable storage medium having stored thereon computer-executable instructions which, when executed by a processor, are used to implement the vehicle security authentication method as described above.

An eleventh aspect, an embodiment of the present disclosure provides a computer program product or computer program comprising computer instructions stored in a computer-readable storage medium. A processor of a computer device reads the computer instructions from the computer-readable storage medium, and the processor executes the computer instructions to cause the computer device performs the vehicle security authentication method according to the embodiments of the present disclosure.

By means of the digital vehicle key, the embodiments of the present disclosure enables the vehicle to sense a number of target users, an intention of target user, and the like, improve the function of senseless authentication, and improve the user experience of the digital vehicle key under the condition of guaranteeing the security performance of the digital vehicle key.

### BRIEF DESCRIPTION OF DRAWINGS

In order to illustrate the technical schemes of the embodiments of the present disclosure more clearly, the drawings needed to be used in the description of the embodiments will be briefly introduced below. Obviously, the drawings in the following description are merely some exemplary embodiments of the present disclosure, and according to such drawings, other drawings can be obtained without creative work for the ordinary skilled in the art.
Fig. 1 is a schematic diagram showing an example framework corresponding to a digital vehicle key according to an embodiment of the present disclosure.
Fig. 2A is a flowchart showing a method for operating a vehicle according to an embodiment of the present disclosure.
Fig. 2B is a schematic diagram showing a relationship between a vehicle and a digital vehicle key according to an embodiment of the present disclosure.
Fig. 2C is another schematic diagram showing a relationship between a vehicle and a digital vehicle key according to an embodiment of the present disclosure.
Fig. 3A shows a flowchart of interactive operations of a vehicle and a mobile terminal in a system according to an embodiment of the present disclosure.
Fig. 3B shows an example structural diagram of a system according to an embodiment of the present disclosure.
Fig. 4A shows a flowchart of interactive operations of a vehicle and a mobile terminal in a system according to an embodiment of the present disclosure.
Fig. 4B shows another example structure diagram of a system according to an embodiment of the present disclosure, which shows a situation of single user and single key.
Fig. 4C shows another example structure diagram of a system according to the embodiment of the present disclosure, which shows a situation of single user and multiple keys.
Fig. 4D shows another example structural diagram of a system according to the embodiment of the present disclosure, which shows a situation of multiple users and multiple keys.
Fig. 5A shows a flowchart of interactive operations of a vehicle and a mobile terminal in a system according to an embodiment of the present disclosure.
Fig. 5B shows another example structural diagram of a system according to an embodiment of the present disclosure.
Fig. 6A shows another example structural diagram of a vehicle according to an embodiment of the present disclosure.
Fig. 6B shows another example structural diagram of a system in which a vehicle performs a prompt mode according to an embodiment of the present disclosure.
Fig. 6C shows another example structural diagram of a system in which a vehicle performs a stay mode according to an embodiment of the present disclosure.
Fig. 6D shows another example structural diagram of a system in which a vehicle performs a greet mode according to an embodiment of the present disclosure.
Fig. 7 is an interactive diagram showing a senseless authentication operation according to an embodiment of the present disclosure.
Fig. 8 is an interactive diagram showing a remote control authentication operation according to an embodiment of the present disclosure.
Fig. 9 is a flowchart showing usage of a digital vehicle key which is located on a mobile terminal for interacting with the aforementioned vehicle according to an embodiment of the present disclosure.
Fig. 10 shows a schematic diagram of an electronic device according to an embodiment of the present disclosure.
Fig. 11 shows a schematic diagram of an architecture of an exemplary computing device according to an embodiment of the present disclosure.
Fig. 12 shows a schematic diagram of a storage medium according to an embodiment of the present disclosure.

### DETAILED DESCRIPTION

In order to make the objectives, technical schemes and advantages of the present disclosure more obvious, exemplary embodiments according to the present disclosure will be described in detail below with reference to the accompanying drawings. Obviously, the described embodiments are only a part of the embodiments of the present disclosure, not all of the embodiments of the present disclosure, and it should be understood that the present disclosure is not limited by the example embodiments described here.

In the present specification and drawings, substantially like or similar steps and elements are denoted by like or similar reference numerals, and repetitive descriptions of such steps and elements will be omitted. Meanwhile, in the description of the present disclosure, terms such as "first" and "second" are only used to distinguish descriptions, and cannot be understood as indicating or implying relative importance or order.

Unless otherwise defined, all of the technical and scientific terms used herein have the same meaning as commonly understood by those skilled in the art to which the present disclosure belongs. The terms used herein are only for purpose of describing the embodiments of the present invention, and is not intended to limit the present invention.

In order to facilitate the description of the present disclosure, the concepts related to the present disclosure are introduced below.

Mobile Intelligent Terminal: A mobile terminal which can accessing a mobile communication network, has an open operating system capable of providing an application program development interface, and can install and run application software.

Digital Key: A technology of integrating functions of vehicle key into a mobile terminal device, and using communication technologies such as NFC, Bluetooth and UWB to implement functions of door opening, starting, and the like of a vehicle based on security capabilities such as SE and TEE.

Digital Key Framework (DKF): A digital key framework should encapsulate the operations related to digital key TA in a life cycle of a digital vehicle key, and provide vehicle key management services to a car factory App and a Native App in the form of unified API for calling. These functions include but are not limited to: device pairing, key life cycle management, key unlocking, locking, sharing, car control, etc. The digital key framework should guarantee the availability of key functions at the terminal side in the authentication process, so that the digital key TA can receive and respond to the authentication message sent by the vehicle in time, for which the specific method is implemented by the mobile terminal manufacturer. The digital key framework should implement access control on key service APIs and maintain access control strategies. The digital key framework should have the abilities of Bluetooth pairing based on general manner with vehicles, establishing Bluetooth connection and implementing parse and encapsulation of Bluetooth authentication data packets interacting with vehicles.

Trusted Execution Environment: A trusted execution environment is a secure area that exists within a mobile terminal device and is separated from REE, for which the specific implementation may be a security mode of a main processor, or a coprocessor that is isolated from the main processor. A trusted execution environment can provide basic security functions, including secure storage, secure startup, isolation mechanism and the like.

Rich Execution Environment: A rich trusted execution environment is an insecure area that exists within a mobile terminal device, runs general operating systems such as Android, iOS and Linux, provides all the functions of the device for upper-layer Apps, and is separated from TEE.

Digital Key TA: A digital key TA is a trusted application program executed in TEE. The TA should call the underlying security capabilities provided by TEE, implement construction and storage of key data, and provide capabilities of encryption, decryption and security control of data for services of key such as pairing, unlocking, locking, sharing and car control. The TA should have the ability to verify the identity of user.

To sum up, the schemes provided by the embodiments of the present disclosure involves technologies such as digital vehicle key technologies, and the embodiments of the present disclosure will be further described in conjunction with the drawings.

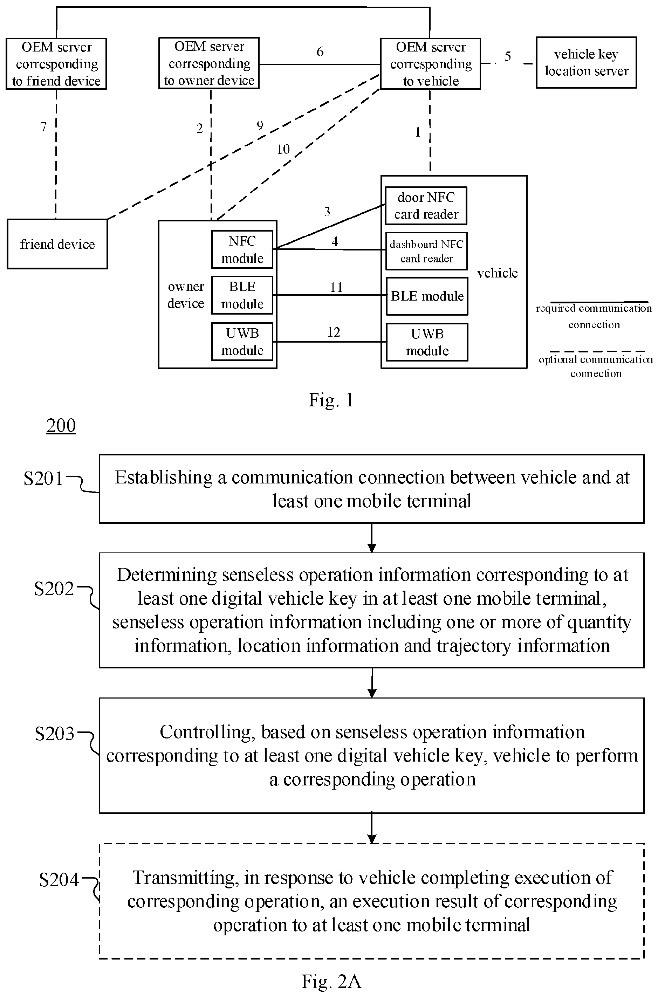

Fig. 1 is a schematic diagram showing an example framework corresponding to a digital vehicle key according to an embodiment of the present disclosure.

As shown in Fig. 1, an example frame corresponding to a digital vehicle key according to an embodiment of the present disclosure includes a mobile terminal (which optionally includes an owner device, a friend device, etc.), a mobile terminal server (an OEM server corresponding to an owner device, an OEM server corresponding to a friend device, etc.), a vehicle, a vehicle server, etc. The mobile terminal and the vehicle may interact through Near Field Communication (NFC), Bluetooth (BLE) and ultra-wide band (UWB) protocols, and one or more of NFC card reader, BLE module and UWB module are deployed at the vehicle side. Both NFC and BLE can implement functions of digital vehicle key, including functions such as digital vehicle key pairing and digital vehicle key usage. UWB is mainly used to assist digital vehicle keys to carry out positioning.

Before using the digital vehicle key, the mobile terminal needs to activate the digital vehicle key first. After activating the digital vehicle key, the mobile terminal may use the digital vehicle key through NFC or BLE. The current solutions for digital vehicle keys not only require the user to actively perform a large amount of operations, but also require the App customized by car factory to complete too many specific operations, which brings poor usage experiences to consumers. Therefore, it is necessary to improve the current solutions for digital vehicle keys.

Based on this, the present disclosure provides a method for operating a vehicle, comprising: establishing a communication connection between the vehicle and at least one mobile terminal; determining senseless operation information corresponding to at least one digital vehicle key in the at least one mobile terminal, wherein the senseless operation information includes one or more of quantity information, location information and trajectory information; and controlling, based on the senseless operation information corresponding to the at least one digital vehicle key, the vehicle to perform a corresponding operation. By means of the digital vehicle key, the embodiments of the present disclosure enables the vehicle to sense a number of target users, an intention of target user, and the like, improve the function of senseless authentication, and improve the user experience of the digital vehicle key under the condition of guaranteeing the security performance of the digital vehicle key.

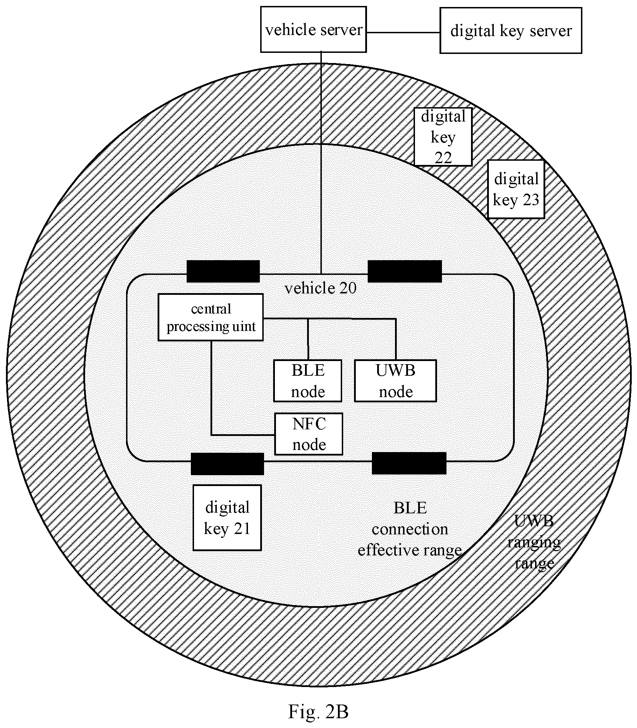

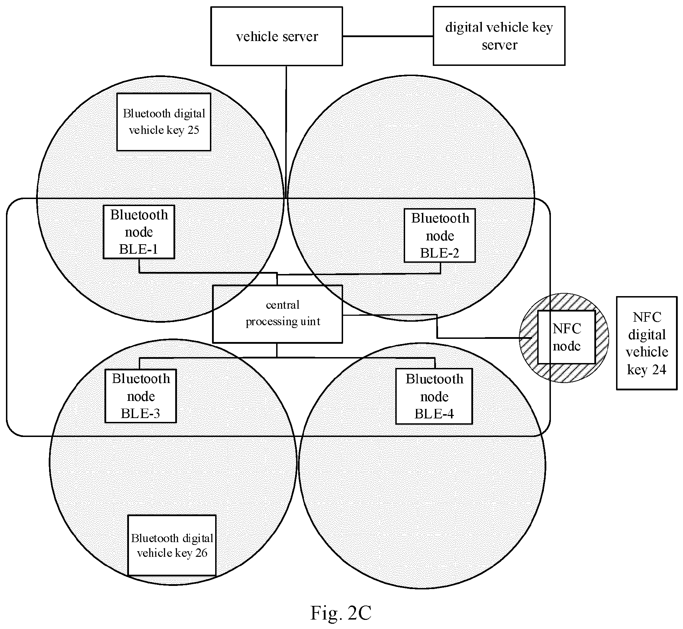

Fig. 2A is a flowchart showing a method 200 for operating a vehicle 20 according to an embodiment of the present disclosure. Fig. 2B is a schematic diagram showing a relationship between a vehicle 20 and a digital vehicle key (21, 22, 23) according to an embodiment of the present disclosure. Fig. 2C is another schematic diagram showing a relationship between a vehicle 20 and a digital vehicle key (24, 25, 26) according to an embodiment of the present disclosure.

A method 200 for operating a vehicle 20 according to an embodiment of the present disclosure may comprise operations S201-S203 as shown in Fig. 2. As shown in Fig. 2A, the method 20 comprises one or all of operations S201 to S203, or may comprise more operations. The executive subject of operations S201 to S203 may be various components located on the vehicle 20 (e.g., a central processing unit, BLE node, UWB node, NFC node etc., on the vehicle 20 as shown in Fig. 2B), or may be various components located outside the vehicle 20. The present disclosure does not limit the executive subject of operations S201 to S203.

For example, in operation S201, a communication connection between the vehicle and at least one mobile terminal is established.

As shown in Fig. 2B, the vehicle 20 according to the embodiment of the present disclosure optionally has a trusted environment and supports functions of digital vehicle key. As an example, the vehicle 20 can, in cooperation with various devices in Fig. 2B or independently, complete one or more of the following operations: (1) Bluetooth connection and request for pairing, in cooperation with the mobile terminal; (2) authentication of identity and key with the mobile terminal, and authentication of key-related service data at the same time; (3) positioning the mobile terminal relative to the vehicle; (4) receiving a request of digital vehicle key for controlling the vehicle's operations, and processing and controlling the vehicle to complete related operations (such as unlocking vehicle, raising and lowering vehicle window, switching on and off air conditioner, starting ignition authority, etc.); (5) support of online upgrade of digital vehicle key application; (6) DK authentication system functions, which can, in cooperation with the mobile terminal, prevent relay attacks.

The mobile terminal according to the embodiment of the present disclosure can be equipped with vehicle manufacturer application software, equipment manufacturer application software, digital vehicle key execution environment and communication module, etc., so as to jointly construct the basic functions of digital vehicle key. By using one or more digital vehicle keys in the terminal device, the functions such as unlocking (or locking) vehicle door, starting (or stopping) vehicle's engine, opening and closing trunk and the like can be implemented. Among other things, the vehicle manufacturer application software (also known as the car factory App) is used to provide users with functional UIs related to digital vehicle key. The equipment manufacturer application software (also known as "Native App") is used to provide users with functional UIs related to digital vehicle key, and perform service processes such as activating, updating, sharing and revocation. The equipment manufacturer application software may trigger the synchronization with the state of the vehicle side after completing an operation of changing the life cycle state of the key, and optionally perform the synchronization by means of the interaction between the servers of both parties. As shown in Fig. 2B, there are three mobile terminals on which digital vehicle keys 21, 22, and 23 are equipped respectively. Any one of the three mobile terminals may establish a communication connection with the vehicle. It is notable that a mobile terminal can be equipped with multiple digital vehicle keys. For example, a mobile terminal can be equipped with a digital vehicle key A using Bluetooth communication connection, a digital vehicle key B using UWB communication connection and a digital vehicle key C using NFC communication connection. The present disclosure is not limited thereto.

As an example, for example, referring to Fig. 2B, the vehicle 20 may be optionally mounted with a BLE node to establish a Bluetooth communication connection with a mobile terminal equipped with a digital vehicle key 21. In which, the BLE node optionally includes a Bluetooth primary node and a Bluetooth secondary node. The Bluetooth primary node in the digital key system is used to establish a Bluetooth communication link between the vehicle and the mobile terminal device, which is responsible for data transmission between both parties. At the same time, the Bluetooth primary node can also be used to implement positioning function. The Bluetooth secondary node in the digital key system is mainly used to assist in implementation of positioning function, thereby providing the users with better experience of senseless function.

As an example, the vehicle can sense the digital vehicle key 21 when the BLE node is within an effective connection range (shown by the gray circle). The mobile terminal equipped with the digital vehicle key 21 may perform data transmission with the vehicle via Bluetooth. Optionally, the process of establishing a Bluetooth communication connection between the vehicle 20 and the mobile terminal equipped with the digital vehicle key 21 includes a Bluetooth connecting operation, a Bluetooth pairing operation, key authentication operation, etc. on the premise of guaranteeing security. The Bluetooth connecting operation and Bluetooth pairing operation can provide a fundamental Bluetooth secure communication link, whereas the key authentication operation ensures the security of data transmission at the service layer, thereby ensuring functional security of the Bluetooth digital vehicle key. The present disclosure does not limit the process of establishing Bluetooth communication connection herein, as long as it can implement the establishment of the communication connection between the vehicle 20 and the mobile terminal equipped with the digital vehicle key 21.

The present disclosure does not limit whether Bluetooth secondary nodes are needed and the number of the nodes, and the skilled in the art can design the number of the nodes in terms of functional requirements, positioning precision requirements, etc. For example, as shown in Fig. 2C, the vehicle 20 can optionally be equipped with four Bluetooth nodes (BLE-1 to BLE-4), and the coverage ranges of each of the Bluetooth nodes are not coincident. Therefore, the Bluetooth node BLE-1 can only sense the mobile terminal equipped with the Bluetooth digital vehicle key 25 in Fig. 2C, whereas the Bluetooth node BLE-3 can only sense the mobile terminal equipped with the Bluetooth digital vehicle key 26. Assuming that the Bluetooth node BLE-1 is located at the left front door (i.e. at the driver seat), then the vehicle 20 can know, upon sensing the Bluetooth digital vehicle key 25, that the vehicle door at the driver seat needs to be opened in order to facilitate the driver to get on. Moreover, the Bluetooth node BLE-3 is located at the right front door (i.e., the front passenger seat), then the vehicle 20 can know, upon sensing the Bluetooth digital vehicle key 26, that the vehicle door at the front passenger seat needs to be opened in order to facilitate another member to get on, and correspondingly adjust the mode in the vehicle (e.g., turn on the air conditioner in the front row).

For example, referring to Fig. 2B, the vehicle 20 may also be optionally mounted with an NFC node and a UWB node to establish an NFC communication connection and a UWB communication connection, respectively. For example, after the vehicle 20 establishes a communication connection with the mobile terminal equipped with the digital vehicle key 21, the vehicle 20 may trigger the UWB node to search for a digital vehicle key in a wider range (shown by the shaded annulus). Because of the wide detection range and high accuracy of UWB, the distance and orientation of other mobile terminals supporting UWB protocol (e.g., mobile terminals equipped with digital vehicle keys 22 and 23) can be located relatively accurately. For another example, referring to Fig. 2C, the vehicle 20 may be mounted with an NFC node at the rear of the vehicle. After the NFC node establishes an NFC communication connection with an NFC digital vehicle key, the vehicle 20 can automatically open the trunk.

It is notable that in some embodiments, operation S201 further includes an authentication operation between the vehicle 20 and the digital vehicle key (21, 22, 23). Optionally, the authentication operation includes senseless authentication operation and remote control authentication operation. Afterwards, an exemplary senseless authentication operation will be further described with reference to Fig. X, and an exemplary remote control authentication operation will be further described with reference to Fig. Y. This will not be detailed here by the present disclosure.

Next, in operation 202, senseless operation information corresponding to at least one digital vehicle key in the at least one mobile terminal is determined, wherein the senseless operation information includes one or more of quantity information, location information and trajectory information.

For example, the vehicle 20 may obtain the senseless operation information corresponding to at least one digital vehicle key in the at least one mobile terminal in various ways. The senseless operation information may include any information related to senseless operation. For example, senseless operation includes passive unlocking operation, passive locking operation, operation of automatic unlocking when approaching, operation of automatic locking when leaving, one-button starting operation, greeting operation, prompting operation, and manufacturer-defined operation, etc. The present disclosure is not limited thereto.

For example, the quantity information may indicate the quantity information corresponding to at least one digital vehicle key in the at least one mobile terminal. For example, referring to Fig. 2B, in the case that the vehicle 20 starts the BLE node and UWB, the vehicle 20 may be able to sense that there are three digital vehicle keys nearby, that is, the quantity information is 3. In the case that the vehicle 20 only starts the BLE node, the vehicle can only sense the digital vehicle key 21, at which time the vehicle 20 can know that the quantity information is 1.

For example, the location information may indicate the location information corresponding to at least one digital vehicle key in the at least one mobile terminal. For example, referring to Fig. 2B, in the case that the vehicle 20 starts the BLE node and UWB, the vehicle 20 may be able to sense a high-precision range and/or a low-precision position of the digital vehicle key (21, 22, 23). Wherein, the high-precision range indicates a specific position of digital vehicle key (such as a distance of the digital vehicle key (21, 22, 23) relative to the vehicle 20, an azimuth angle relative to the origin of the vehicle coordinate system, etc.), whereas the low-precision position indicates whether the digital vehicle key is within an effective function execution range. Of course, the present disclosure is not limited thereto.

For example, the trajectory information may indicate the movement trajectory corresponding to at least one digital vehicle key in the at least one mobile terminal. For example, referring to Fig. 2B, in the case that the vehicle 20 starts the BLE node and UWB, the vehicle 20 may be able to sense that the digital vehicle key (21, 22, 23) is moving in the direction towards the vehicle 20 at a certain speed or is moving in the direction away from the vehicle 20 at a certain speed. The trajectory information further includes the corresponding positions, speeds and the like of the digital vehicle key (21, 22, 23) at a plurality of discrete moments within a certain period of time. The present disclosure is not limited thereto.

It is notable that in addition to the quantity information, location information, and trajectory information exemplified above, the senseless operation information may include more or less information. The present disclosure is not limited thereto.

In operation S203, based on the senseless operation information corresponding to the at least one digital vehicle key, the vehicle is controlled to perform a corresponding operation.

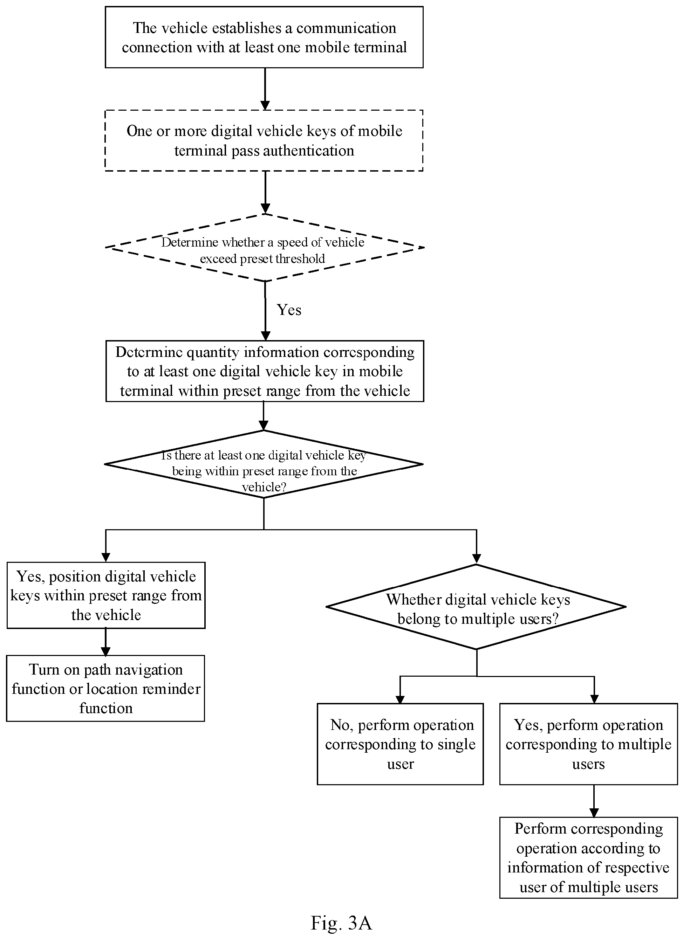

For example, in conjunction with the senseless operation information corresponding to the at least one digital vehicle key, the vehicle 20 can identify the number of target users, the intention of the target users, and the like, so as to perform various operations. For example, the quantity information corresponding to at least one digital vehicle key in the at least one mobile terminal is usually associated with the number of the target users, and the vehicle 20 can infer how many users are currently located inside the vehicle or outside the vehicle 20 through the quantity information, and in turn infer that the driver's intention may be to pick up other users or just to reach the destination. For another example, both the above location information and trajectory information can be used to indicate the intention of the target users. For example, in the scenario of online car-hailing, the customer's mobile terminal may be temporarily granted the authority of the digital vehicle key. If the vehicle 20 detects that the position and trajectory of the customer's digital vehicle key are abnormal, the vehicle 20 can infer that the customer is looking for a waiting point, and in turn the vehicle 20 sends information related to waiting point to the customer without requiring the driver to perform any further operations. Examples of various operations will be further described below with reference to Figs. 3A to 6B. This will not be detailed here by the present disclosure.

Optionally, the method 200 further comprises operation S204, in which a result of the performance of the corresponding operation is transmitted to the at least one mobile terminal in response to the vehicle completing the performance of the corresponding operation.

In addition, in response to the vehicle 20 still performing the corresponding operation, it is also possible to transmit an event notification related to the corresponding operation "being performing" to the at least one mobile terminal. In response to the vehicle 20 failing to successfully perform the corresponding operation, it is also possible to transmit reasons for failure (e.g., command invalid, authentication uncompleted, instruction decryption failed, too frequent instruction, execution timeout, execution failed, no operation authority, execution unit abnormality, execution condition unsatisfied, etc.) to the at least one terminal. The present disclosure is not limited thereto.

Therefore, the embodiments of the present disclosure, through the digital vehicle key, enables the vehicle to sense a number of target users, an intention of target user, and the like, improving the function of senseless authentication, and improving the user experience of the digital vehicle key under the condition of guaranteeing the security performance of the digital vehicle key.

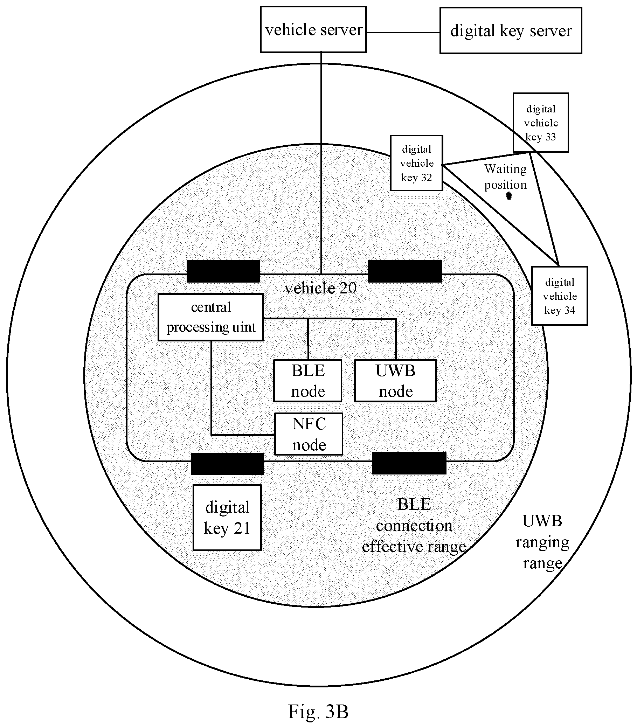

Next, the embodiments according to the present disclosure will be further illustrated with reference to Figs. 3A to 3B. In which, Fig. 3A shows a flowchart of interactive operations of a vehicle 20 and a mobile terminal in a system 30 according to an embodiment of the present disclosure. Fig. 3B shows an example structural diagram of a system 30 according to an embodiment of the present disclosure.

As shown in Fig. 3B, the system 30 according to the embodiment of the present disclosure comprises the above vehicle 20 and at least one mobile terminal. Optionally, the vehicle 20 may be configured to perform the above method 200.

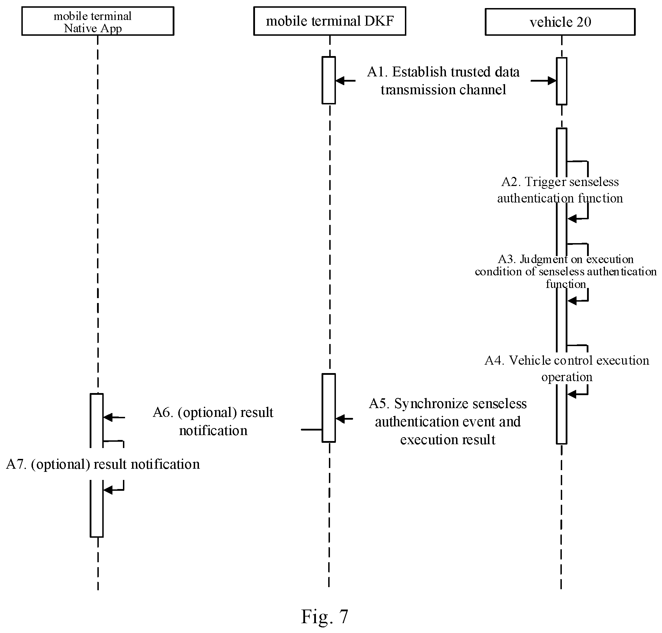

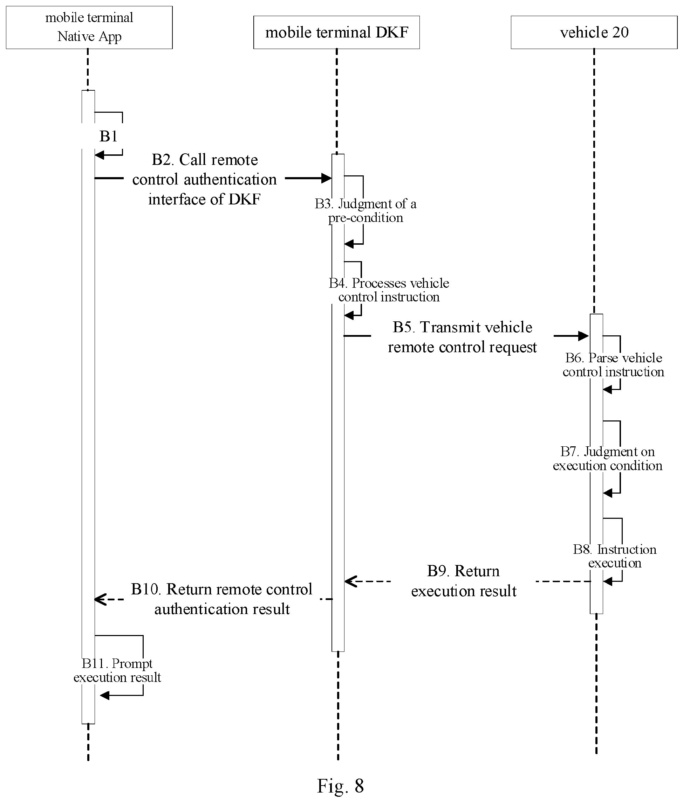

Specifically, referring to Figs. 3A and 3B, first, the vehicle 20 may establish a communication connection with the at least one mobile terminal through the aforementioned operation S201. Optionally, assuming that the vehicle 20 is already in the process of traveling, the digital vehicle key of the driver of the vehicle 20 has passed the authentication of the vehicle 20. The vehicle 20 can further pass the mutual authentication with other digital vehicle keys (e.g., the digital vehicle keys of the passengers inside the vehicle 20), which is not limited by the present disclosure. For details with respect to the authentication method, please refer to the following detailed example approaches with reference to Figs. 7 and 8, which will not be detailed here by the present disclosure.

Next, optionally, in operation S202, in addition to the senseless operation information, the vehicle 20 may also determine whether the speed of the vehicle is less than a preset threshold. In some examples, in response to the speed of the vehicle being less than the preset threshold, the vehicle 20 will determine the quantity information of mobile terminals within a preset range from the vehicle, and/or the quantity information of digital vehicle keys within a preset range from the vehicle.

If the speed of the vehicle for the driver is slow (i.e., less than the preset threshold), the vehicle 20 can infer that the driver's current driving intention is to "drive to pick up another user (e.g., customer/family/friend)". At this point, in response to the vehicle 20 determining that the speed of the vehicle is less than the preset threshold, the vehicle 20 will attempt to determine whether there are other digital vehicle keys nearby. For example, as shown in Fig. 3B, the vehicle 20 will attempt to search for mobile terminals within the preset range from the vehicle, and determine that there are mobile terminals, among the at least one mobile terminal described with reference to Figs. 2A to 2C, within the preset range from the vehicle. At this point, the vehicle 20 further determines the quantity information of mobile terminals within the preset range from the vehicle, and/or determines the quantity information of digital vehicle keys within the preset range from the vehicle.

For example, as shown in Fig. 3B, the vehicle 20 may use the NFC nodes, BLE nodes and UWB nodes thereon to obtain the above quantity information.

For example, the vehicle 20 further determines the quantity information of mobile terminals within the preset range from the vehicle, and/or determines the quantity information of digital vehicle keys within the preset range from the vehicle, optionally comprises the following process in which: the vehicle 20 may establish connection with some of the at least one mobile terminal (e.g., the above driver's mobile terminal), and then the vehicle 20 establishes connection with other some of the at least one mobile terminal (e.g., other mobile terminals than the driver's mobile terminal) by enhancing power of a vehicle-mounted antenna; next, the vehicle 20 obtains the quantity information of mobile terminals within a coverage range of the enhanced vehicle-mounted antenna, and/or obtains the quantity information of digital vehicle keys within a coverage range of the said vehicle-mounted antenna.

For another example, assuming that in operation S201, the vehicle 20 establishes connection with some of the at least one mobile terminal through a first communication protocol, and then the vehicle 20 establishes connection with other terminal devices of the at least one mobile terminal through a second communication protocol, wherein the communication range of the second communication protocol is larger than that of the first communication protocol. Then in a specific implementation, the vehicle 20 further determining the quantity information of mobile terminals within the preset range from the vehicle, and/or determining the quantity information of digital vehicle keys within the preset range from the vehicle, optionally comprises the following process: the vehicle obtaining the quantity information of mobile terminals establishing connections through the first communication protocol and the second communication protocol, and/or obtaining the quantity information of digital vehicle keys interacting through the first communication protocol and the second communication protocol.

Either and/or combination of the above two processes will be further illustrated by several examples.

For example, in the case that the vehicle 20 includes an NFC node and a BLE node, and the vehicle 20 has established a communication connection with the mobile terminal (e.g, the driver's mobile terminal, which is equipped with an NFC digital vehicle key) through NFC communication connection, the vehicle 20 may turn on the BLE node to further obtain senseless operation information (e.g., quantity information) corresponding to other digital vehicle keys.

For example, in the case that the vehicle 20 includes an NFC node, a UWB node and a BLE node, and the vehicle 20 has established a communication connection with the mobile terminal (e.g., the driver's mobile terminal, which is equipped with an NFC digital vehicle key) through NFC communication connection, the vehicle 20 may further obtain senseless operation information (e.g., quantity information) corresponding to other digital vehicle keys by means of any of the following operations: (1) simultaneously turning on the BLE node and the UWB node to obtain a digital BLE key and a UWB key; (2) turning on the BLE node to obtain a digital BLE key, and then turning on the UWB node to obtain a UWB key; (3) turning on the UWB node to obtain a digital UWB key, and then turning on the BLE node to obtain a BLE key.

For another example, in the case that the vehicle 20 only includes a BLE node, and the vehicle 20 has established a communication connection with the mobile terminal (e.g., the driver's mobile terminal, which is equipped with a BLE digital vehicle key) through BLE communication connection, the vehicle 20 may further obtain senseless operation information (e.g., quantity information) corresponding to other digital vehicle keys by means of any of the following operations: (1) re-turning on the BLE node to obtain other digital vehicle keys; (2) boosting the power of the BLE node to obtain other digital vehicle keys.

For another example, in the case that the vehicle 20 includes a BLE node and a UWB node, and the vehicle 20 has established a communication connection with the mobile terminal (e.g., the driver's mobile terminal, which is equipped with a BLE digital vehicle key) through BLE communication connection, the vehicle 20 may further obtain senseless operation information (e.g., quantity information) corresponding to other digital vehicle keys by means of any of the following operations: (1) re-turning on the BLE node to obtain other digital vehicle keys; (2) boosting the power of the BLE node to obtain other digital vehicle keys; (3) turning on the UWB node to obtain other UWB digital vehicle keys.

For another example, in the case that the vehicle 20 only includes a UWB node, and the vehicle 20 has established a communication connection with the mobile terminal (e.g., the driver's mobile terminal, which is equipped with a UWB digital vehicle key) through UWB communication connection, the vehicle 20 may further obtain senseless operation information (e.g., quantity information) corresponding to other digital vehicle keys by means of any of the following operations: (1) re-turning on the UWB node to obtain other digital vehicle keys; (2) boosting the power of the UWB node to obtain other digital vehicle keys.

Then, in operation S203, in response to the quantity information corresponding to at least one digital vehicle key in the mobile terminal within the preset range from the vehicle 20 indicating that there is one of the at least one mobile terminal being within the preset range from the vehicle, the vehicle is controlled to turn on a path navigation function or a location reminder function. Specifically, when the vehicle 20 is in the process of traveling at a slow speed, the vehicle 20 may find that there are other digital vehicle keys nearby, and these digital vehicle keys may also pass the authentication of the vehicle 20 in the manner described later with reference to Figs. 7 and 8. At this point, as shown in Fig. 3B, the vehicle 20 may determine that there are three mobile terminals (which are equipped with digital vehicle keys 32, 33 and 34, respectively) located in a range for UWB ranging. Therefore, the vehicle 20 may determine that the quantity information corresponding to at least one digital vehicle key in the mobile terminal within the preset range from the vehicle 20 is 3. Of course, the present disclosure is not limited thereto.

Specifically, in some embodiments, assuming that in operation S202, the vehicle 20 further obtains the location information corresponding to digital vehicle keys of respective mobile terminals after obtaining the above quantity information, then in operation S203, the vehicle 20 may further control the vehicle to turn on the path navigation function or the location reminder function based on the location information. For example, based on the location information corresponding to these digital vehicle keys, the vehicle 20 may determine a waiting position as shown in Fig. 3B. Then, optionally, the waiting position in Fig. 3B is close to each of these digital vehicle keys (e.g., at the center of a triangle formed by these three digital vehicle keys). Of course, the waiting position can also be determined in other ways. For example, any position that is close to each of these digital vehicle keys and convenient for parking can be selected according to map information. The present disclosure is not limited thereto.

In addition, in some embodiments, the vehicle 20 not only controls the vehicle to turn on the path navigation function or the location reminder function according to the above quantity information and location information, but also controls whether to unlock the vehicle door in advance according to the quantity information. For example, the vehicle 20 may further combine user preference information from these digital vehicle keys to open the user's preferred vehicle door in advance. The present disclosure is not limited thereto.

Alternatively, referring to Fig. 3A, assuming that in operation S203, in response to the quantity information corresponding to at least one digital vehicle key in the mobile terminal within the preset range from the vehicle indicating that there is none of the at least one mobile terminal being within the preset range from the vehicle, the number-of-users information corresponding to the at least one digital vehicle key is determined. For example, when it is determined that the at least one digital vehicle key in the mobile terminal within the preset range from the vehicle is zero, the number-of-users information inside the vehicle 20 may be taken as the number-of-users information corresponding to the at least one digital vehicle key.

Then, in response to the number-of-users information corresponding to the at least one digital vehicle key satisfying a preset number-of-users condition, the vehicle is controlled to perform an operation corresponding to the number-of-users condition. At this point, as shown in Fig. 3A, for example, if the vehicle 20 does not obtain other digital vehicle keys within the preset range from the vehicle (e.g., within the UWB range shown in Fig. 3B), the vehicle 20 further judges whether the obtained plurality of digital vehicle keys belong to multiple users. If all of the digital vehicle keys belong to a single user (e.g., the driver), a digital vehicle key function for single user is turned on. At this point, only according to the driver's preference, the seat may be adjusted, the music mode corresponding to the user may be turned on, or the like. If the digital vehicle key sensed by the vehicle 20 belongs to multiple users, a digital vehicle key function for multiple users is turned on, for example, the running mode of the vehicle is adjusted from sports mode to comfort mode, and so on. At this point, the vehicle 20 can know that there are a plurality of mobile terminals, each of which is equipped with a different digital vehicle key, inside the vehicle. Optionally, the tire pressure may be adjusted according to the sensed number of digital vehicle keys to guarantee that the vehicle is under a proper tire pressure, that is, the position of the vehicle body under the tire pressure without the weight of passengers is relatively stable.

In a specific implementation, in response to the number of mobile terminals being one, and/or in response to the number of digital vehicle keys being one, the vehicle 20 is controlled to perform an operation corresponding to single user. For example, the operation corresponding to single user includes one or more of: manipulating the vehicle in sports mode, turning on the global sound field, turning on the front window, adjusting the driver seat, turning on the air conditioner in the front row, and adjusting the tire pressure. Alternatively, in response to the number of mobile terminals being greater than one, and/or in response to the number of digital vehicle keys being greater than one, the vehicle 20 is controlled to perform an operation corresponding to multiple users. The operation corresponding to multiple users includes one or more of: manipulating the vehicle in comfort mode, turning on the partitioned sound field, adjusting the driver seat, adjusting the front passenger seat, adjusting the seat in the back row, simultaneously opening both front and rear windows, adjusting the tire pressure, and simultaneously turning on the air conditioners in both front and back rows. Of course, the present disclosure is not limited thereto.

Furthermore, in another specific implementation, in the case that the senseless operation information further includes location information, in response to the number of mobile terminals being greater than one, and/or in response to the number of digital vehicle keys being greater than one, the vehicle 20 will be configured to obtain the location information of the mobile terminals and/or digital vehicle keys. Then, the vehicle 20 further makes a judgment based on the location information. For example, in response to the location information indicating that the distance between the mobile terminal and/or digital vehicle key and the vehicle is less than a preset threshold, the vehicle 20 is controlled to perform an operation corresponding to single user, whereas in response to the location information indicating that the distance between the mobile terminal and/or digital vehicle key and the vehicle is greater than a preset threshold, the vehicle 20 is controlled to perform an operation corresponding to multiple users. Of course, the present disclosure is not limited thereto.

Therefore, with the quantity information of the digital vehicle key, the embodiments of the present disclosure can enable the vehicle to sense a number of target users, an intention of target users, and the like, improve the function of senseless authentication, and improve the user experience of the digital vehicle key under the condition of guaranteeing the security performance of the digital vehicle key.

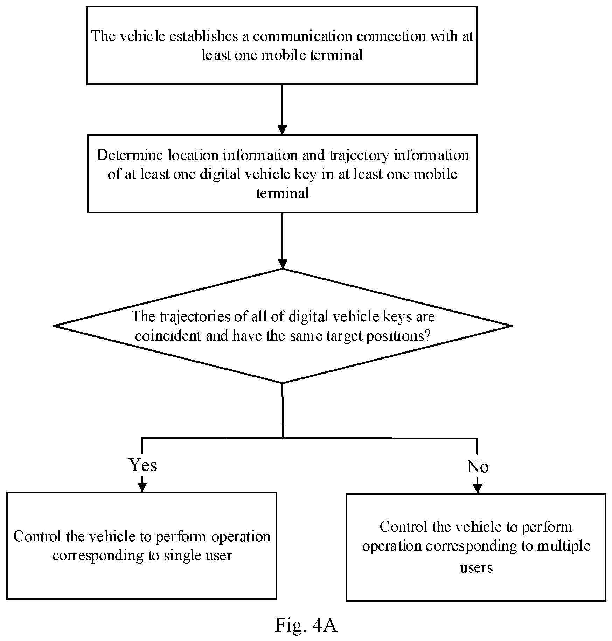

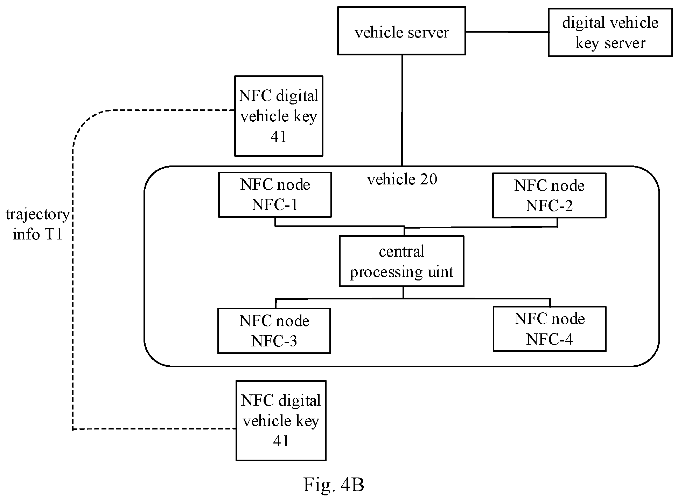

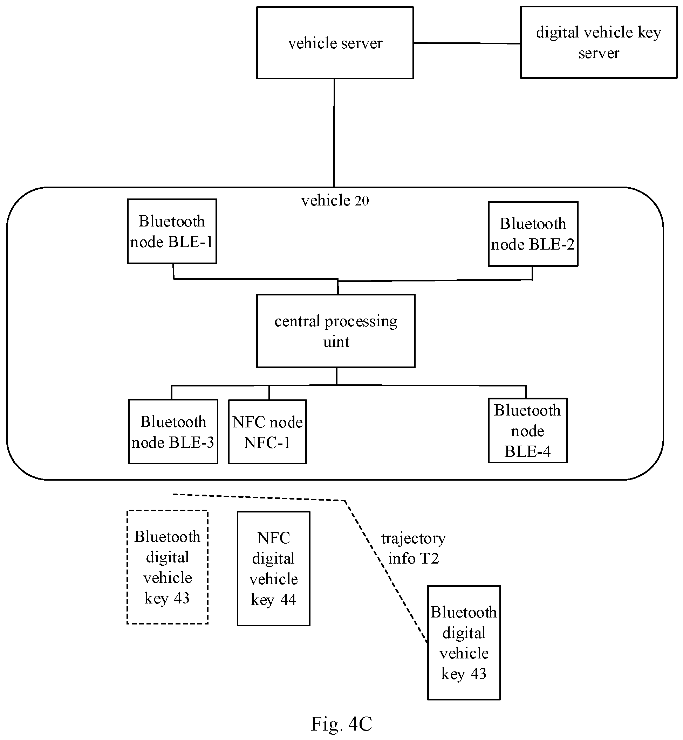

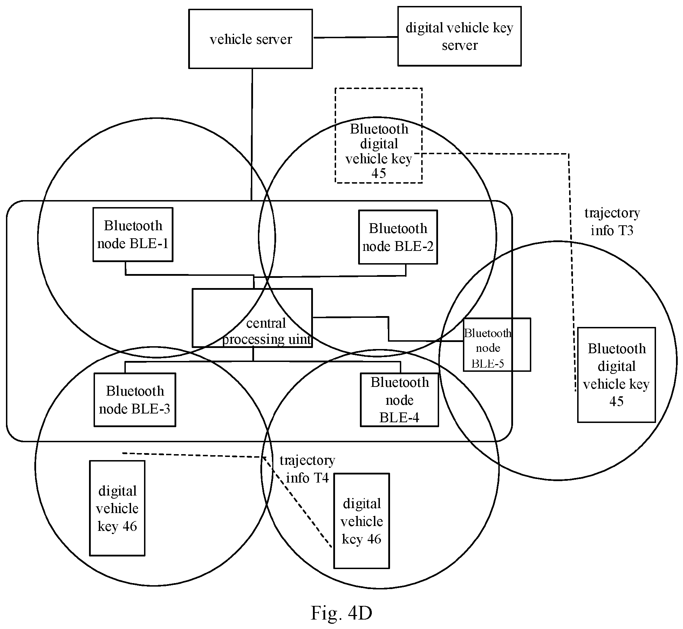

Next, another embodiment according to the present disclosure will be further illustrated with reference to Figs. 4A to 4D. In which, Fig. 4A shows a flowchart of interactive operations of a vehicle 20 and a mobile terminal in a system 30 according to an embodiment of the present disclosure. Fig. 4B shows another example structure diagram of a system 30 according to an embodiment of the present disclosure, which shows a situation of single user and single key. Fig. 4C shows another example structure diagram of a system 30 according to an embodiment of the present disclosure, which shows a situation of a single user and multiple keys. Fig. 4D shows another example structure diagram of a system 30 according to an embodiment of the present disclosure, which shows a situation of multiple users and multiple keys.

As shown in Figs. 4B to 4D, the system 30 according to the embodiment of the present disclosure includes the above vehicle 20 and at least one mobile terminal. Optionally, the vehicle 20 may be configured to perform the above method 200.

Specifically, referring to Fig. 4A, first, the vehicle 20 may establish a communication connection with the at least one mobile terminal through the aforementioned operation S201. Optionally, assuming that the vehicle 20 is parked in a parking lot and the vehicle 20 is in locked state at this time. For example, referring to Fig. 4B, optionally, the driver's mobile terminal may only include an NFC digital vehicle key 41, which can mutually authenticate with the vehicle 20 in the manner described later with reference to Figs. 7 and 8. Referring to Fig. 4C, optionally, the driver's mobile terminal (mobile phone side) may only include a Bluetooth digital vehicle key 43, which, similarly, can mutually authenticate with the vehicle 20 in the manner described later with reference to Figs. 7 and 8. In addition, driver's another mobile terminal (e.g., a watch) may further include an NFC digital vehicle key 44, which, similarly, can mutually authenticate with the vehicle 20 in the manner described later with reference to Figs. 7 and 8. Referring to Fig. 4D, optionally, the driver's mobile terminal may include a Bluetooth digital vehicle key 46, and the passenger's mobile terminal may also include a Bluetooth digital vehicle key 45.

Next, the vehicle 20 may obtain the trajectory information in the senseless operation information corresponding to at least one digital vehicle key in the at least one mobile terminal through the aforementioned operation S202.

For example, referring to Fig. 4B, optionally, the vehicle 20 may include four NFC nodes (NFC-1 to NFC-4). The NFC node NFC-1 may sense the NFC digital vehicle key 41 at time t1, and then the NFC node NFC-3 may sense the NFC digital vehicle key 41 at time t2. Therefore, the location information corresponding to the NFC digital vehicle key 41 at time t1 and time t2 can be obtained, and thus trajectory information T1 can be obtained. That is, the vehicle 20 can infer the moving trajectory of the NFC digital vehicle key 41 during the period from time t1 to time t2.

For another example, referring to Fig. 4C, optionally, the vehicle 20 may include four BLE nodes (BLE-1 to BLE-4) and one NFC node NFC-1. The BLE node BLE-4 may sense the BLE digital vehicle key 43 at time t1. Then, the BLE node BLE-3 may sense the BLE digital vehicle key 43 at time t2, and meanwhile, the NFC node NFC-1 also senses the NFC digital vehicle key 44 at time t2. Therefore, trajectory information T2 corresponding to the BLE digital vehicle key 43 at time t1 and time t2 can be obtained. Meanwhile, at time t2, the position of the NFC digital vehicle key 44 sensed by the NFC node NFC-1 is coincident with the position of the BLE digital vehicle key 43 at time t2. At this point, the vehicle 20 can infer that the trajectory of the NFC digital vehicle key 44 should be coincident with that of the BLE digital vehicle key 43, that is, the vehicle 20 can infer that the trajectory information of the NFC digital vehicle key 44 is also the trajectory information T2. Assuming that the trajectory information T2 is coincident with a first preset trajectory, then the vehicle 20 may be controlled to perform an operation corresponding to single user.

For another example, referring to Fig. 4D, the vehicle 20 may optionally include five NFC nodes (NFC-1 to NFC-5). The BLE node BLE-4 may sense the BLE digital vehicle key 46 at time t1. Then, the BLE node BLE-3 may sense the BLE digital vehicle key 46 at time t2. The BLE node BLE-5 may sense the BLE digital vehicle key 45 at time t1. Then, the BLE node BLE-2 may sense the BLE digital vehicle key 45 at time t2. Therefore, the location information corresponding to the BLE digital vehicle key 46 at time t1 and time t2 can be obtained, and thus trajectory information T4 can be obtained. The location information corresponding to the BLE digital vehicle key 45 at time t1 and time t2 can be obtained, and based on this, trajectory information T3 can be obtained. At this point, based on the difference between the trajectory information T3 and T4, the vehicle 20 can infer that the trajectories of the BLE digital vehicle key 46 and the BLE digital vehicle key 45 are different and the target positions thereof are also different. Assuming that the trajectory information T4 is coincident with a second preset trajectory, the trajectory information T3 is coincident with a third preset trajectory, and the second preset trajectory and the third preset trajectory are not coincident, then the vehicle 20 may be controlled to perform an operation corresponding to multiple users.

In a specific implementation, the vehicles 20 in Figs. 4B to 4D may judge the user's target position through the trajectory of the digital vehicle key, and preliminarily divide the user's target position according to the position of the vehicle door, i.e., dividing the target position into driver seat, front passenger seat, left rear passenger seat and right rear passenger seat. Of course, the present disclosure is not limited thereto.

Then, the vehicle 20 may, through the aforementioned operation S203, in response to the trajectory information of the at least one digital vehicle key being coincident with a same preset trajectory, the vehicle 20 is controlled to perform an operation corresponding to single user. For example, in response to the location information and trajectory information of the at least one digital vehicle key indicating that the trajectories of all of the digital vehicle keys are coincident and the target positions thereof are the same, the vehicle 20 is controlled to perform an operation corresponding to single user. For example, in the examples of Figs. 4B and 4C, optionally, the vehicle 20 may determine that the trajectories of all of the digital vehicle keys are coincident with the same trajectory information, and infer that the target positions of all of the digital vehicle keys are the same, at which time it is necessary to perform an operation corresponding to single user. As mentioned above, the operation corresponding to single user include one or more of: controlling the vehicle in sports mode, turning on the global sound field, turning on the front window, adjusting the tire pressure, adjusting the driver seat, and turning on the air conditioner in the front row. Of course, the present disclosure is not limited thereto.

Alternatively, in response to the trajectory information of the at least one digital vehicle key being coincident with a plurality of different preset trajectories, the vehicle 20 is controlled to perform an operation corresponding to multiple users. For example, in some cases, in response to the location information and trajectory information of the at least one digital vehicle key indicating that the trajectory of at least one of the at least one digital vehicle key is not coincident with each of the trajectories of other digital vehicle keys or has a different target position, the vehicle 20 may be controlled to perform an operation corresponding to multiple users. In the example of Fig. 4D, the vehicle 20 may determine that the trajectories of all of the digital vehicle keys are coincident with a plurality of preset trajectories, or optionally infer that the trajectories of some of the digital vehicle keys are not coincident and the target positions thereof are different, at which time it is necessary to perform an operation corresponding to multiple users. As mentioned above, the operation corresponding to multiple users includes one or more of: controlling the vehicle in comfort mode, turning on the partitioned sound field, adjusting the driver seat, adjusting the front passenger seat, adjusting the seat in the back row, simultaneously opening both front and rear windows, adjusting the tire pressure, and simultaneously turning on the air conditioners in both front and back rows. Of course, the present disclosure is not limited thereto. For example, in a specific implementation, according to the target position of target user, the vehicle 20 may perform corresponding actions for the user. For example, if it is judged that the target position of target user is the front passenger seat, the vehicle door of the front passenger seat will be opened. For example, in Fig. 4D, the vehicle 20 judges that the direction of the digital vehicle key 46 is from the front passenger seat, and the trajectory of the digital vehicle key 45 is from the right rear vehicle door, so the corresponding vehicle door can be opened for the user in advance. Optionally, according to the target position of digital vehicle key, the vehicle may further adjust the mode of sound field. For example, when the vehicle 20 detects that a user in a certain area is in rest state, the vehicle 20 will automatically turn off the sound field in that area.

For example, the vehicle 20 may adjust various components built in the vehicle according to the following rules. Rule 1: If the vehicle 20 detects two digital vehicle keys, and the target positions of the two digital vehicle keys are the driver seat and the front passenger seat respectively, the vehicle 20 will set the power mode of the vehicle 20 as sport mode, turn on the global sound field, open the front window, turn on the air conditioner in the front row and open the front door. Rule 2: If the vehicle 20 detects two digital vehicle keys, and the target positions of the two digital vehicle keys are the driver seat and the left rear passenger seat respectively, the vehicle 20 will set the power mode of the vehicle 20 as comfort mode, turn on the partitioned sound field, open both front and rear windows, turn on air conditioners in both front and back rows, and open the front left door and the rear left door. Rule 3: If the vehicle 20 detects two digital vehicle keys, and the target positions of the two digital vehicle keys are the driver seat and the right rear passenger seat respectively, the vehicle 20 will set the power mode of the vehicle 20 as comfort mode, turn on the partitioned sound field, open both front and rear windows, turn on air conditioners in both front and back rows, and open the front left door and the rear right door. Rule 4: If the vehicle 20 detects three digital vehicle keys, and the target positions of the three digital vehicle keys are the driver seat, the front passenger seat and the right (left) rear passenger seat respectively, the vehicle 20 will set the power mode of the vehicle 20 as comfort mode, turn on the global sound field, open both front and rear windows, turn on air conditioners in both front and back rows, and open all of the vehicle doors. It should be understood by those skilled in the art that the vehicle 20 can further set more rules, which is not limited by the present disclosure.

Therefore, with the location information and trajectory information of the digital vehicle key the embodiments of the present disclosure can enable the vehicle to sense a number of target users, an intention of target users, and the like, improve the function of senseless authentication, and improve the user experience of the digital vehicle key under the condition of guaranteeing the security performance of the digital vehicle key.

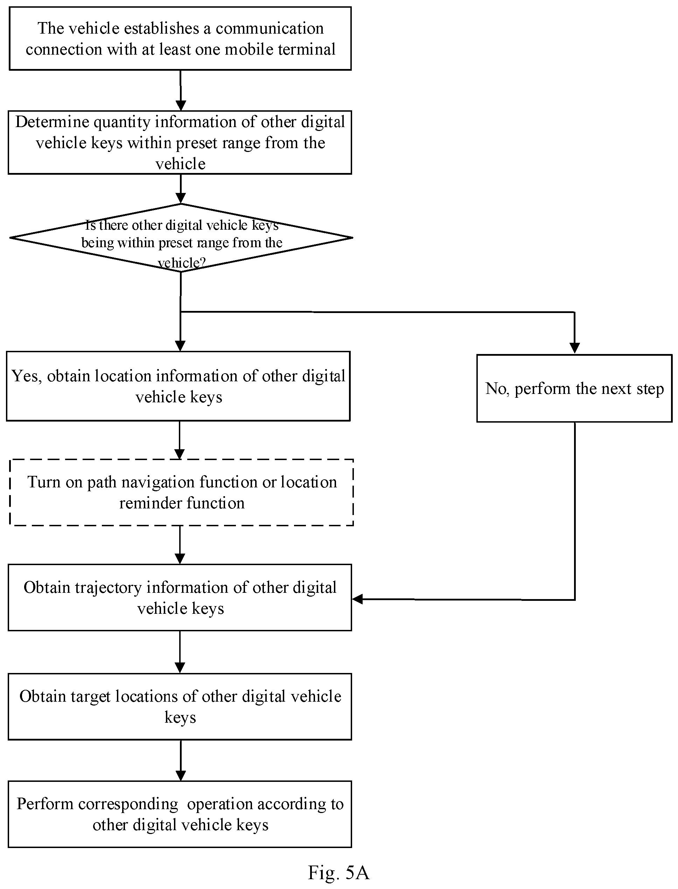

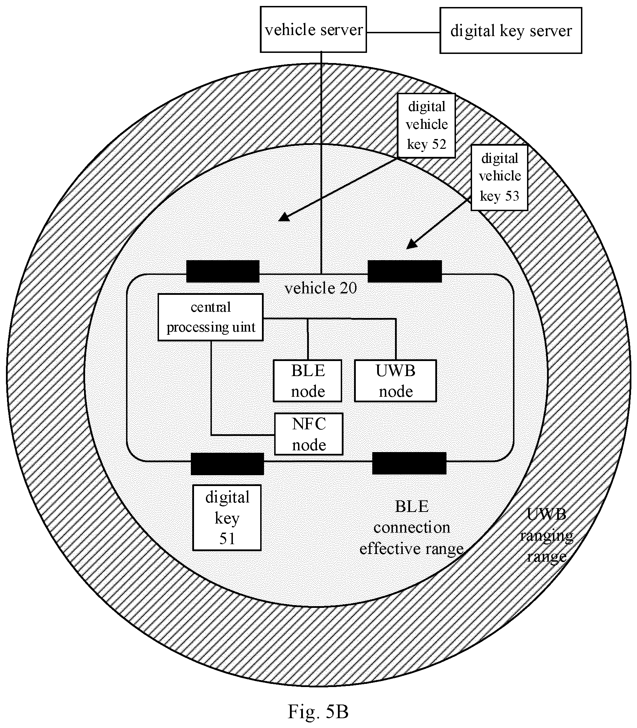

Next, yet another embodiment according to the present disclosure will be further illustrated with reference to Figs. 5A to 5B. In which, Fig. 5A shows a flowchart of interactive operations of a vehicle 20 and a mobile terminal in a system 30 according to an embodiment of the present disclosure. Fig. 5B shows another example structural diagram of a system 30 according to an embodiment of the present disclosure.

As shown in Fig. 5B, the system 30 according to the embodiment of the present disclosure includes the above vehicle 20 and at least one mobile terminal. Optionally, the vehicle 20 may be configured to perform the above method 200.

Specifically, referring to Fig. 5A, first, the vehicle 20 may establish a communication connection with the at least one mobile terminal through the aforementioned operation S201. Optionally, referring to Fig. 5B, assuming that the vehicle 20 is already in the process of traveling, and the digital vehicle key 51 of the driver of the vehicle 20 has passed the authentication of the vehicle 20. The vehicle 20 may also pass the mutual authentication with other digital vehicle keys (e.g., the digital vehicle key of the passengers inside the vehicle 20), which is not limited by the present disclosure. For details of the authentication method, please refer to the following detailed example approaches with reference to Figs. 7 and 8, which will not be detailed here by the present disclosure.

Next, the vehicle 20 may obtain the quantity information in the senseless operation information corresponding to at least one digital vehicle key in the at least one mobile terminal through the aforementioned operation S202. For example, as shown in Fig. 5B, the vehicle 20 may use the NFC nodes, BLE nodes and UWB nodes thereon to obtain the above quantity information. As an example, the vehicle 20 may obtain the quantity information of the digital vehicle keys 52 and 53 through the UWB node thereon. At this point, the vehicle 20 may determine that the mobile terminals, among the at least one mobile terminal, equipped with the digital vehicle keys 52 and 53 are located within the preset range from the vehicle (e.g., within a range for UWB effective ranging). At this point, in response to the vehicle 20 determining that there are mobile terminals equipped with the digital vehicle keys 52 and 53 located within the preset distance from the vehicle, the vehicle 20 may determine the quantity information of digital vehicle keys of other mobile terminals is 2. Next, in the subsequent operation S203, the vehicle 20 will correspondingly turn on the path navigation function or the location reminder function. Related examples have been described previously in detail with reference to Figs. 3A to 3B, and will not be detailed here.

Further, the vehicle 20 may obtain the trajectory information in the senseless operation information corresponding to at least one digital vehicle key (e.g., digital vehicle keys 52 and 53) in the at least one mobile terminal through the aforementioned operation S202. Then, in operation S203, the vehicle 20 will correspondingly open or turn on the vehicle door, sound field, vehicle window and air conditioner corresponding to the vehicle. The trajectory information and corresponding operations have been described in detail with reference to Figs. 4A to 4D, and will not be detailed here.

In addition, there is yet another situation where the vehicle 20 may have gone to the waiting position according to the path navigation function or the location reminder function. At this point, the vehicle 20 may turn off the UWB node to save energy. Due to the turn-off of the UWB node, at this time, the vehicle 20 may not be able to sense the quantity information of the digital vehicle keys 52 and 53, but the vehicle 20 may correspondingly open or turn on the vehicle door, sound field, vehicle window and air conditioner corresponding to the vehicle according to the trajectory information in the previously obtained senseless operation information corresponding to the digital vehicle keys 52 and 53.

Therefore, with the quantity information and trajectory information of the digital vehicle key the embodiments of the present disclosure can enable the vehicle to sense a number of target users, an intention of target users, and the like, improve the function of senseless authentication, and improve the user experience of the digital vehicle key under the condition of guaranteeing the security performance of the digital vehicle key.

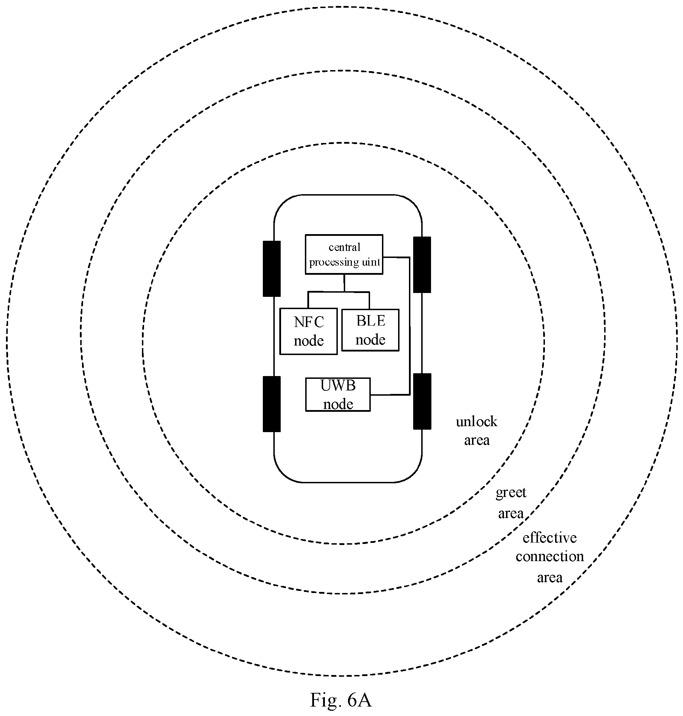

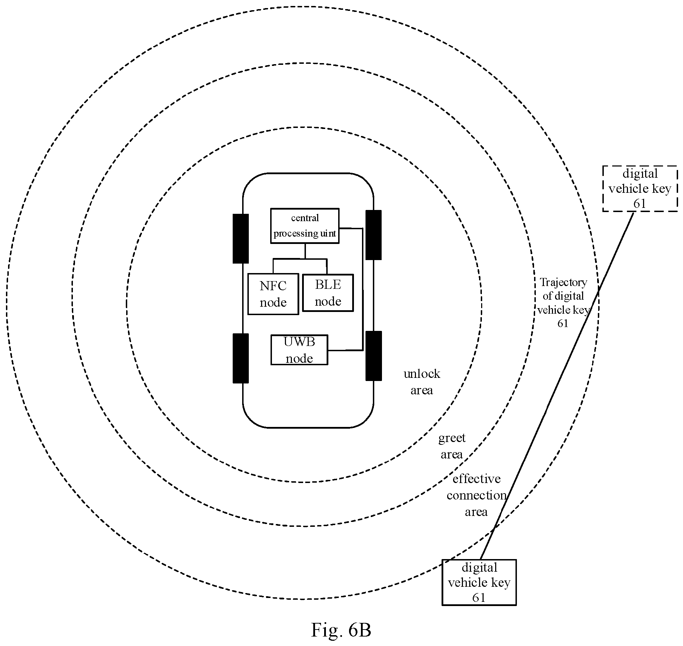

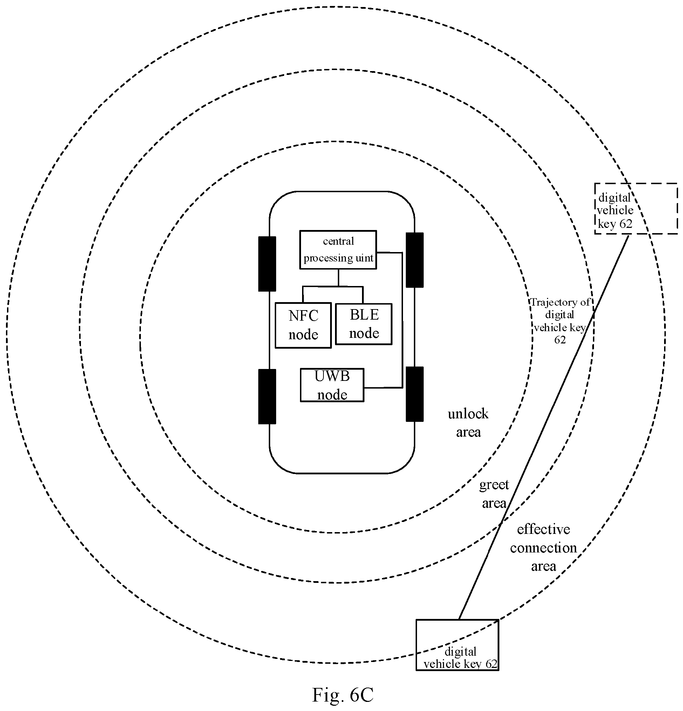

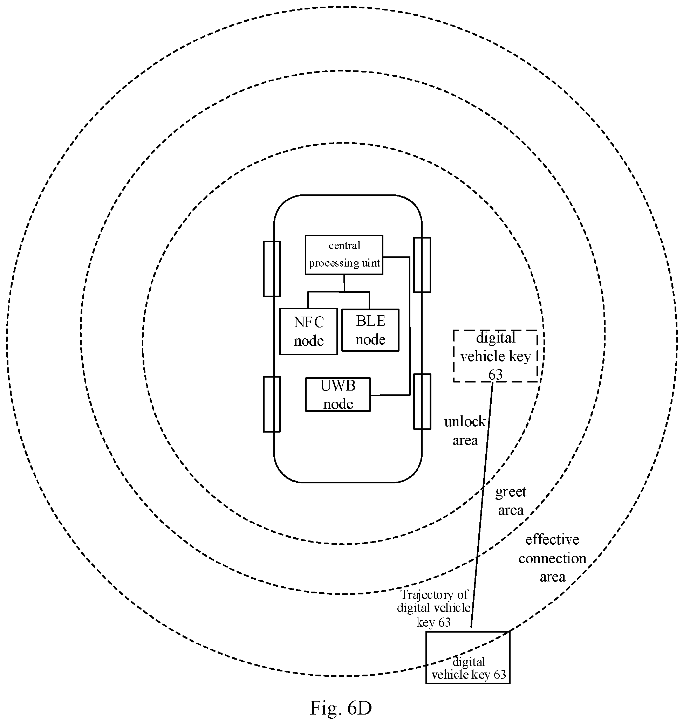

Next, yet another embodiment according to the present disclosure will be further illustrated with reference to Figs. 6A to 6D. In which, Fig. 6A shows another example structural diagram of a vehicle 20 according to an embodiment of the present disclosure. Fig. 6B shows another example structural diagram of a system 30 in which a vehicle 20 performs a prompt mode according to an embodiment of the present disclosure. Fig. 6C shows another example structural diagram of a system 30 in which a vehicle 20 performs a stay mode according to an embodiment of the present disclosure. Fig. 6D shows another example structural diagram of a system 30 in which a vehicle 20 performs a greet mode according to the embodiment of the present disclosure.

In a specific example, assuming that the above senseless operation information includes trajectory information, and the vicinity of the vehicle includes an effective connection area, a greet area and an unlock area. Based on the senseless operation information corresponding to the at least one digital vehicle key, the vehicle is controlled to perform an corresponding operation comprises: determining a duration for which the digital vehicle key is located in the effective connection area of the vehicle based on the trajectory information, and determining whether the vehicle turns on the reminder function based on the duration for which the digital vehicle key is located in the effective connection area of the vehicle; or determining a duration for which the digital vehicle key is located in the effective connection area of the vehicle and a duration for which the digital vehicle key is located in the greet area of the vehicle based on the trajectory information, and determining whether the vehicle turns on the greet function based on the duration for which the digital vehicle key is located in the effective connection area of the vehicle and the duration for which the digital vehicle key is located in the greet area of the vehicle; or determining a duration for which the digital vehicle key is located in the greet area of the vehicle and a duration for which the digital vehicle key is located in the unlock area of the vehicle based on the trajectory information, and determining whether the vehicle turns on the unlock function based on the duration for which the digital vehicle key is located in the greet area of the vehicle and the duration for which the digital vehicle key is located in the unlock area of the vehicle. Of course, the present disclosure is not limited thereto. This example is described in detail below.

First, the vehicle 20 may establish a communication connection with the at least one mobile terminal through the aforementioned operation S201. Optionally, assuming that the vehicle 20 is parked in the parking lot and the vehicle 20 is in locked state at this time. Referring to Fig. 6A, the vehicle 20 may include NFC nodes, BLE nodes and UWB nodes. Through the NFC nodes, BLE nodes and UWB nodes, the vehicle 20 may set an area within 1.5 meters to 3.5 meters away from it as the unlock area, an area within 6.5 meters to 9.5 meters away from it as the greet area, and an area within 10 meters to 20 meters away from it as the effective connection area.

Next, as an example, referring to Fig. 6B, the vehicle 20 may determine the trajectory information in the senseless operation information of at least one digital vehicle key in the at least one mobile terminal through the aforementioned operation S202. As shown in Fig. 6B, the vehicle 20 may determine that the digital vehicle key 61 is intermittently located in the effective connection area of the vehicle for a period of time (assuming the duration of the period of time is D1) through the trajectory information of the digital vehicle key 61, and the vehicle 20 may further determine a duration (assumed as D2) for which the digital vehicle key 61 is located in the effective connection area of the vehicle. The vehicle 20 may further determine a ratio of the duration D2 for which the digital vehicle key 61 is located in the effective connection area of the vehicle to the duration D1. If the ratio meets a certain requirement (e.g., greater than 20% and less than 60%), the vehicle 20 can infer that the user of the mobile terminal holding the digital vehicle key 61 is looking for the vehicle. At this point, in operation S203, the vehicle 20 may turn on the horn and the headlight (e.g., turn on the horn once and flash the light twice) to prompt the user of the location of the vehicle.

Then, as yet another example, referring to Fig. 6C, the vehicle 20 may also determine the trajectory information in the senseless operation information of at least one digital vehicle key in the at least one mobile terminal through the aforementioned operation S202. As shown in Fig. 6C, the vehicle 20 may determine that the digital vehicle key 62 is intermittently located in the effective connection area and the greet area of the vehicle for a period of time (assuming the duration of the period of time is D3) through the trajectory information of the digital vehicle key 62. The vehicle 20 may further determine a duration (assumed as D4) for which the digital vehicle key 62 is located in the effective connection area of the vehicle and a duration (assumed as D5) for which the digital vehicle key 62 is located in the greet area of the vehicle. The vehicle 20 may further determine a ratio of the duration D4 for which the digital vehicle key 61 is located in the effective connection area of the vehicle to D5. Alternatively, the vehicle 20 may further determine a ratio between the duration for which the digital vehicle key 62 is located in the effective connection area of the vehicle and the duration D5 for which the digital vehicle key 62 is located in the greet area. If the ratio meets a certain requirement (e.g., greater than 40% and less than 60%), the vehicle 20 can infer that the user of the mobile terminal holding the digital vehicle key 62 is only staying near the vehicle 20 and does not want to start up the vehicle. At this point, in operation S203, the vehicle 20 may suspend startup to save energy.

Then, as yet another example, referring to Fig. 6D, the vehicle 20 may further determine the trajectory information in the senseless operation information of at least one digital vehicle key in the at least one mobile terminal through the aforementioned operation S202. As shown in Fig. 6D, the vehicle 20 may determine that the digital vehicle key 63 passes through the effective connection area, the greet area and the unlock area sequentially for a period of time through the trajectory information of the digital vehicle key 63. At this point, the vehicle 20 can infer that the user of the mobile terminal holding the digital vehicle key 63 wishes to start up the vehicle. At this point, in operation S203, the vehicle 20 may be started up to improve the user experience.

Figs. 6A to 6D are only examples, which is not limited by the present disclosure. Therefore, with the trajectory information of the digital vehicle key, the embodiments of the present disclosure can enable the vehicle to sense an intention of target users and the like, improve the function of senseless authentication, and improve the user experience of the digital vehicle key under the condition of guaranteeing the security performance of the digital vehicle key.

Fig. 7 is an interactive diagram showing a senseless authentication operation according to an embodiment of the present disclosure.

The senseless authentication operation includes keyless entry and starting operation (also known as Passive Entry Passive Start), automatic unlock operation and other operations that do not require the active participation of user, and meanwhile, the entire senseless authentication operation can be completed by the digital vehicle key in the mobile terminal without the participation of car factory App. As shown in Fig. 7, the senseless authentication operation includes the following sub-operations A1-A7.

A1: A Bluetooth communication connection between the mobile terminal and the vehicle 20 is established, and the operations such as key authentication and the like are completed at the same time, and a reliable data transmission channel is established.

A2: Senseless authentication functions are triggered, for example, the vehicle 20 triggers the functions such as one-button startup and keyless entry and the like.

A3: Judgment is performed on an execution condition of senseless authentication functions, including judging on the following conditions: (1) The Bluetooth connection is established and the key authentication is successfully completed; (2) The currently used digital vehicle key has the authority to perform senseless authentication; (3) Judgment by the vehicle on the position of the mobile terminal device identifies that it is currently in an effective function execution range.

A4: In response to the requirement of the execution condition being satisfied, the execution unit of the vehicle 20 completes the vehicle control execution operation. If the condition is not satisfied, then the step 5 is directly performed, and the vehicle 20 synchronizes the senseless authentication event with the mobile terminal.

A5: The vehicle 20 synchronizes through the Bluetooth transmission channel, and transmits the senseless authentication event and an execution result to the DKF of the mobile terminal.

A6: Optionally, the mobile terminal DKF notifies the mobile terminal Native App of the senseless authentication event and the execution result.

A7: Optionally, the Native App notifies the user of the execution result of the senseless authentication event by means of message reminder or other notification ways.

Specifically, as an example, based on the above senseless authentication operation, the present disclosure further provides a method for operating a vehicle corresponding to a first digital vehicle key or a second digital vehicle key, the first digital vehicle key being located at a first mobile terminal and the second digital vehicle key being located at a second mobile terminal, the method comprising: establishing, by a first mobile terminal, a Bluetooth communication connection with the vehicle; jointly performing, by a first digital vehicle key in the first mobile terminal key authentication operation with the vehicle; triggering a senseless authentication function and determining whether an execution condition for the senseless authentication function has been satisfied by the vehicle; in response to the execution condition for the senseless authentication function having been satisfied, establishing, by the vehicle, a communication connection with a second mobile terminal, jointly performing, by a second digital vehicle key in the second mobile terminal, key authentication operation with the vehicle, determining, by the vehicle, senseless operation information corresponding to the second digital vehicle key, wherein the senseless operation information includes one or more of quantity information, location information and trajectory information, and controlling, based on the senseless operation information corresponding to the second digital vehicle key, the vehicle to perform a corresponding operation; in response to the execution condition for the senseless authentication function having not been satisfied, synchronizing, by the vehicle, a senseless authentication event with the first mobile terminal; transmitting, by the vehicle, the senseless authentication event and an execution result to the first mobile terminal or the second mobile terminal through the Bluetooth communication connection; displaying or broadcasting, by the first mobile terminal or the second mobile terminal, the execution result of the senseless authentication event.

As yet another example, based on the above senseless authentication operation, the present disclosure further provides a system for operating a vehicle, wherein the system comprises the vehicle, a first mobile terminal and a second mobile terminal, the vehicle corresponding to a first digital vehicle key or a second digital vehicle key, the first digital vehicle key being located at the first mobile terminal and the second digital vehicle key being located at the second mobile terminal, the system being configured to: establish, by a first mobile terminal, a Bluetooth communication connection with the vehicle; jointly perform, by a first digital vehicle key in the first mobile terminal, key authentication operation with the vehicle; trigger a senseless authentication function and determine whether an execution condition for the senseless authentication function has been satisfied by the vehicle; in response to the execution condition for the senseless authentication function having been satisfied, establish, by the vehicle, a communication connection with a second mobile terminal, jointly perform, by a second digital vehicle key in the second mobile terminal, key authentication operation with the vehicle, and determine, by the vehicle, senseless operation information corresponding to the second digital vehicle key, wherein the senseless operation information includes one or more of quantity information, location information and trajectory information, and control, based on the senseless operation information corresponding to the second digital vehicle key, the vehicle to perform a corresponding operation; in response to the execution condition for the senseless authentication function having not been satisfied, synchronize, by the vehicle, a senseless authentication event with the first mobile terminal; transmit, by the vehicle, the senseless authentication event and an execution result to the first mobile terminal or the second mobile terminal through the Bluetooth communication connection; to display or broadcast, by the first mobile terminal or the second mobile terminal, the execution result of the senseless authentication event.

Of course, the present disclosure is not limited thereto.

Fig. 8 is an interactive diagram showing a remote control authentication operation according to an embodiment of the present disclosure.

The remote control authentication operation includes vehicle Remote Keyless Entry (RKE) operation, and vehicle control operation may be actively initiated by the user through application software. As shown in Fig. 8, the remote control authentication operation includes the following sub-operations B1-B11.

B1: The mobile terminal actively triggers the vehicle remote control function in the Native App, such as unlocking the vehicle door, and enters the remote control authentication process.

B2: The application software calls the remote control authentication interface of the DKF to initiate a remote control authentication request.

B3: After receiving the remote control authentication request, the DKF first performs judgment on a pre-condition, i.e., judges whether the Bluetooth connection between the mobile terminal and the vehicle 20 has been established and the key authentication has been successfully completed. If it is not completed, the user is prompted and guided to operate the mobile terminal to complete the connection and authentication operation, and if the condition is satisfied, the method proceed to the next step.

B4: The DKF processes the vehicle control instruction, including encryption processing of the instruction data and the like.

B5: The vehicle remote control request is transmitted to the vehicle 20 through the established trusted Bluetooth channel.

B6: The vehicle receives the request and parses the vehicle control instruction transmitted by Bluetooth.

B7: The vehicle performs judgment on the execution condition, including: (1) The Bluetooth connection between the mobile terminal and the vehicle 20 is established and the key authentication is successfully completed; (2) The currently used digital vehicle key has the authority to perform remote control authentication.

B8: In response to the execution condition being satisfied, the vehicle control execution unit of the vehicle 20 completes the execution of the instruction and completes the processing of the execution result.

B9: The vehicle 20 returns the execution result to the DKF through the Bluetooth channel.

B10: The DKF receives the execution result, parses and returns it to the Native App through the interface.

B11: The Native App prompts the execution result to the mobile terminal by means of message reminder or other notification ways.

Specifically, as an example, based on the remote control authentication operation, the present disclosure further provides a method for operating a vehicle that corresponds to a first digital vehicle key or a second digital vehicle key, the first digital vehicle key being located in a first mobile terminal and the second digital vehicle key being located in a second mobile terminal, the method comprises: triggering, by the first mobile terminal, a vehicle remote control function; initiating a remote control authentication request and determining that a Bluetooth connection has been established between the first mobile terminal and the vehicle and key authentication is successfully completed by the first mobile terminal; generating, by the first mobile terminal, a vehicle control instruction; transmitting, by the first mobile terminal, a vehicle remote control request including the vehicle control instruction to the vehicle through Bluetooth connection; receiving the vehicle remote control request, parsing the vehicle control instruction and determining that an execution condition of the vehicle control instruction has been satisfied by the vehicle; establishing, by the vehicle, a communication connection with the second mobile terminal, jointly performing, by the second digital vehicle key in the second mobile terminal , key authentication operation with the vehicle, and determining, by the vehicle, senseless operation information corresponding to the second digital vehicle key, wherein the senseless operation information includes one or more of quantity information, location information and trajectory information; controlling, based on the senseless operation information corresponding to the second digital vehicle key, the vehicle to perform an corresponding operation; transmitting, by the vehicle, an execution result of the operation to the first mobile terminal or the second mobile terminal through a Bluetooth communication connection; displaying or broadcasting, by the first mobile terminal or the second mobile terminal, the execution result of the operation.

As yet another example, based on the above remote control authentication operation, the present disclosure further provides a system for operating a vehicle, wherein the system comprises the vehicle, a first mobile terminal and a second mobile terminal, the vehicle corresponding to a first digital vehicle key or a second digital vehicle key, the first digital vehicle key being located at the first mobile terminal and the second digital vehicle key being located at the second mobile terminal, the system being configured to: trigger , by the first mobile terminal, a vehicle remote control function; initiate a remote control authentication request and determine that a Bluetooth connection has been established between the first mobile terminal and the vehicle and key authentication is successfully completed by the first mobile terminal; generate, by the first mobile terminal, a vehicle control instruction; transmit, by the first mobile terminal, a vehicle remote control request including the vehicle control instruction to the vehicle through Bluetooth connection; receive the vehicle remote control request, parse the vehicle control instruction and determine that an execution condition of the vehicle control instruction has been satisfied by the vehicle; establish, by the vehicle, a communication connection with the second mobile terminal, jointly perform, by the second digital vehicle key in the second mobile terminal, key authentication operation with the vehicle, and determine, by the vehicle, senseless operation information corresponding to the second digital vehicle key, wherein the senseless operation information includes one or more of quantity information, location information and trajectory information; control, based on the senseless operation information corresponding to the second digital vehicle key, the vehicle to perform an corresponding operation; transmit, by the vehicle, an execution result of the operation to the first mobile terminal or the second mobile terminal through a Bluetooth communication connection; display or broadcast, by the first mobile terminal or the second mobile terminal, the execution result of the operation.

Of course, the present disclosure is not limited thereto.

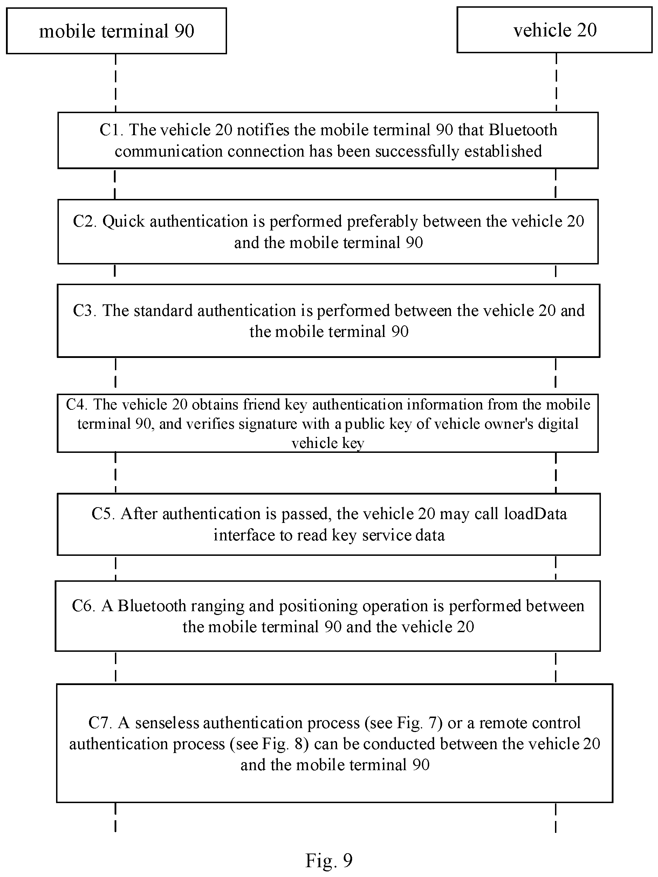

Fig. 9 is a flowchart showing usage of a digital vehicle key which is located on a mobile terminal 90 for interacting with the aforementioned vehicle 20 according to an embodiment of the present disclosure. As an example, after any of the above digital vehicle keys is paired with the vehicle 20, the subsequent control operations of the vehicle 20 (such as vehicle starting operation) can be completed using the digital vehicle key.

Specifically, referring to Fig. 9, a mobile terminal 90 equipped with a digital vehicle key may interact with the vehicle 20 by the following steps C1 to C7. The mobile terminal 90 can be any of the aforementioned mobile final terminals.

C1: The vehicle 20 notifies the mobile terminal 90 that the Bluetooth communication connection has been successfully established, and the Bluetooth digital vehicle key can be used normally.

C2: Quick authentication is performed preferably between the vehicle 20 and the mobile terminal 90. If the quick authentication is successful, a secure channel is established and the method skips to step C5, or if the quick authentication is failed, a standard authentication is turned to.

C3: The standard authentication is performed between the vehicle 20 and the mobile terminal 90. If the standard authentication is successful, a quick authentication key is saved, while a secure channel is established, and the method skips to step C5, or if it is failed, the type of the failure is judged. If the failure is not an error of not being able to find KeyID, it is considered as an authentication failure, and the process ends. If the failure is an error of not being able to find KeyID, it is considered as the first standard authentication of a friend key, and then a process of obtaining friend key authentication information of step C4 is performed.

C4. The vehicle 20 obtains the friend key authentication information from the mobile terminal 90, and verifies the signature with a public key of the vehicle owner's digital vehicle key, and if the verification is passed, saves the public key of the digital vehicle key, and verifies the signature transmitted by the mobile terminal 90 with this public key, thus completing the standard authentication process of friend key for the first time.

C5. After the authentication is passed, the vehicle 20 and the mobile terminal 90 have established a secure channel, and the vehicle 20 may call the loadData interface to read the key service data.

C6. A Bluetooth ranging and positioning operation is performed between the mobile terminal 90 and the vehicle 20.

C7. According to the function settings of the car factory and the subsequent active operations of the user, a senseless authentication process (see Fig. 7) or a remote control authentication process (see Fig. 8) can be conducted between the vehicle 20 and the mobile terminal 90, and the user can call the vehicle control instruction to complete the vehicle control operation.

Specifically, as an example, based on the above interaction process, the present disclosure further provides a method of operating a vehicle that corresponds to a first digital vehicle key or a second digital vehicle key, the first digital vehicle key being located at a first mobile terminal and the second digital vehicle key being located at a second mobile terminal, the method comprising:
establishing, by the first mobile terminal, a Bluetooth communication connection with the vehicle;
notifying, by the vehicle, the first mobile terminal that the Bluetooth communication connection has been successfully established and that the usage state of the first digital vehicle key is normal;
performing, by the vehicle, quick authentication with the first mobile terminal;
in response to quick authentication being failed, performing, by the vehicle, standard authentication with the first mobile terminal,
in response to a failure of standard authentication and an error reason being an unknown identifier of the first digital vehicle key, obtaining friend key authentication information from the first mobile terminal and verifying a signature in the friend key authentication information with a public key of a main digital vehicle key of the vehicle by the vehicle, in response to the verification of the signature being passed, saving, by the vehicle, a public key of the first digital vehicle key in the friend key authentication information and verifying a signature transmitted by the first mobile terminal with the public key of the first digital vehicle key;
in response to a failure of standard authentication and an error reason being not the unknown identifier of the first digital vehicle key, determining that an authentication between the first mobile terminal and the vehicle has failed;
in response to a success of quick authentication or a success of standard authentication or the signature of the first mobile terminal being passed, establishing a secure information channel with the first mobile terminal and obtaining service data of the first digital vehicle key by the vehicle;
performing, by the first mobile terminal, Bluetooth ranging and positioning operation with the vehicle;
jointly performing, by the vehicle, the first mobile terminal and the second mobile terminal, a first operation or a second operation;
wherein the first operation includes: triggering a senseless authentication function and determining whether an execution condition of the senseless authentication function has been satisfied by the vehicle; in response to the execution condition of the senseless authentication function having been satisfied, establishing, by the vehicle, a communication connection with the second mobile terminal, jointly performing, by the second digital vehicle key in the second mobile terminal, key authentication operation with the vehicle, determining, by the vehicle, senseless operation information corresponding to the second digital vehicle key, wherein the senseless operation information includes one or more of quantity information, location information and trajectory information, and controlling, based on the senseless operation information corresponding to the second digital vehicle key, the vehicle to perform a corresponding operation; in response to the execution condition of the senseless authentication function having not been satisfied, synchronizing, by the vehicle, a senseless authentication event with the first mobile terminal; transmitting, by the vehicle, the senseless authentication event and an execution result to the first mobile terminal or the second mobile terminal through the Bluetooth communication connection; displaying or broadcasting, by the first mobile terminal or the second mobile terminal, the execution result of the senseless authentication event;
the second operation includes: triggering, by the first mobile terminal, a vehicle remote control function; initiating a remote control authentication request and determining that a Bluetooth connection has been established between the first mobile terminal and the vehicle and key authentication is successfully completed by the first mobile terminal; generating, by the first mobile terminal, a vehicle control instruction; transmitting, by the first mobile terminal, a vehicle remote control request including the vehicle control instruction to the vehicle through the Bluetooth connection; receiving the vehicle remote control request, parsing the vehicle control instruction and determining that an execution condition of the vehicle control instruction have been satisfied by the vehicle; establishing, by the vehicle, a communication connection with the second mobile terminal, jointly performing, by the second digital vehicle key in the second mobile terminal, key authentication operation with the vehicle, and determining, by the vehicle, senseless operation information corresponding to the second digital vehicle key, wherein the senseless operation information includes one or more of quantity information, location information and trajectory information; controlling, based on the senseless operation information corresponding to the second digital vehicle key, the vehicle to perform a corresponding operation; transmitting, by the vehicle, an execution result of the operation to the first mobile terminal or the second mobile terminal through the Bluetooth communication connection; displaying or broadcasting, by the first mobile terminal or the second mobile terminal, the execution result of the operation.

As yet another example, based on the above interaction process, the present disclosure further provides a system for operating a vehicle, wherein the system comprises the vehicle, a first mobile terminal and a second mobile terminal, the vehicle corresponding to a first digital vehicle key or a second digital vehicle key, the first digital vehicle key being located at the first mobile terminal and the second digital vehicle key being located at the second mobile terminal, the system being configured to: establish, by the first mobile terminal, a Bluetooth communication connection with the vehicle;
notify, by the vehicle, the first mobile terminal that the Bluetooth communication connection has been successfully established and that the usage state of the first digital vehicle key is normal;
perform, by the vehicle, quick authentication with the first mobile terminal;
perform, by the vehicle, standard authentication with the first mobile terminal, in response to a failure of quick authentication,
in response to a failure of standard authentication and an error reason being that an unknown identifier of the first digital vehicle key, obtain friend key authentication information from the first mobile terminal and verify a signature in the friend key authentication information with a public key of a main digital vehicle key of the vehicle by the vehicle, in response to the verification of the signature being passed, save a public key of the first digital vehicle key in the friend key authentication information and verify a signature transmitted by the first mobile terminal with the public key of the first digital vehicle key by the vehicle;
in response to a failure of standard authentication and an error reason being not that the unknown identifier of the first digital vehicle key, determine that an authentication between the first mobile terminal and the vehicle has failed;
in response to a success of quick authentication or a success of standard authentication or the signature of the first mobile terminal being passed, establish a secure information channel with the first mobile terminal and obtain service data of the first digital vehicle key by the vehicle;
perform, by the first mobile terminal, Bluetooth ranging and positioning operation with the vehicle;
jointly perform, by the vehicle, the first mobile terminal and the second mobile terminal, a first operation or a second operation;
wherein the first operation includes: triggering a senseless authentication function and determining whether an execution condition of the senseless authentication function has been satisfied by the vehicle; in response to the execution condition of the senseless authentication function having been satisfied, establishing, by the vehicle, a communication connection with the second mobile terminal, jointly performing, by the second digital vehicle key in the second mobile terminal, key authentication operation with the vehicle, determining, by the vehicle, senseless operation information corresponding to the second digital vehicle key, wherein the senseless operation information includes one or more of quantity information, location information and trajectory information, and controlling, based on the senseless operation information corresponding to the second digital vehicle key, the vehicle to perform a corresponding operation; in response to the execution condition of the senseless authentication function having not been satisfied, synchronizing, by the vehicle, a senseless authentication event with the first mobile terminal; transmitting, by the vehicle, the senseless authentication event and an execution result to the first mobile terminal or the second mobile terminal through the Bluetooth communication connection; displaying or broadcasting, by the first mobile terminal or the second mobile terminal, the execution result of the senseless authentication event;
the second operation includes: triggering, by the first mobile terminal, a vehicle remote control function; initiating a remote control authentication request and determining that a Bluetooth connection has established between the first mobile terminal and the vehicle and key authentication is successfully completed by the first mobile terminal; generating, by the first mobile terminal, a vehicle control instruction; transmitting, by the first mobile terminal, a vehicle remote control request including the vehicle control instruction to the vehicle through the Bluetooth connection; receiving the vehicle remote control request, parsing the vehicle control instruction and determining that an execution condition of the vehicle control instruction have been satisfied by the vehicle; establishing, by the vehicle, a communication connection with the second mobile terminal, jointly performing, by the second digital vehicle key in the second mobile terminal, key authentication operation with the vehicle, and determining, by the vehicle, senseless operation information corresponding to the second digital vehicle key, wherein the senseless operation information includes one or more of quantity information, location information and trajectory information; controlling, based on the senseless operation information corresponding to the second digital vehicle key, the vehicle to perform a corresponding operation; transmitting, by the vehicle, an execution result of the operation to the first mobile terminal or the second mobile terminal through the Bluetooth communication connection; displaying or broadcasting, by the first mobile terminal or the second mobile terminal, the execution result of the operation.

Of course, the present disclosure is not limited thereto.

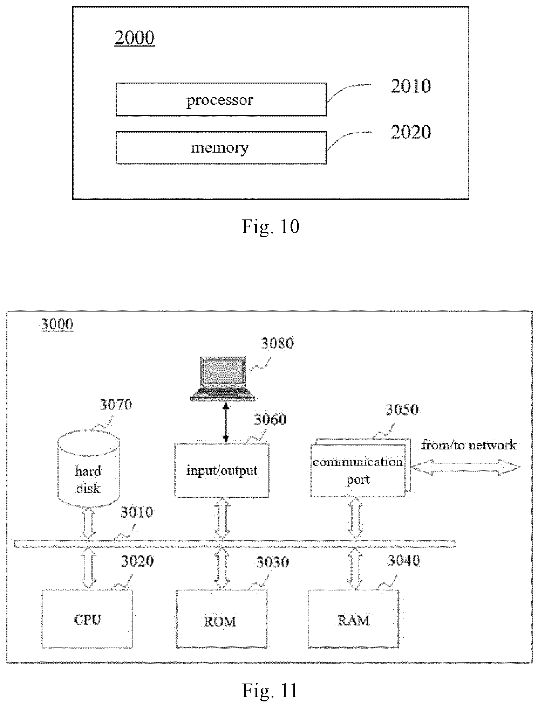

According to yet another aspect of the present disclosure, there is further provided an electronic device. Fig. 10 shows a schematic diagram of an electronic device 2000 according to an embodiment of the present disclosure.

As shown in Fig. 10, the electronic device 2000 may include one or more processors 2010 and one or more memories 2020. In which, the memory 2020 stores computer-readable codes which, when executed by the one or more processors 2010, can perform the vehicle security authentication method as described above.

The processor in the embodiments of the present disclosure may be an integrated circuit chip with signal processing capability. The processor may be a general processor, a digital signal processor (DSP), an application specific integrated circuit (ASIC), a field programmable gate array (FPGA) or other programmable logic device, discrete gate or transistor logic device, and discrete hardware component. Various methods, steps and logic blocks disclosed in the embodiments of the present application can be implemented or executed. The general processor can be a microprocessor or can be any conventional processor, and can be of X86 architecture or ARM architecture.

In general, various example embodiments of the present disclosure can be implemented in hardware, or dedicated circuits, software, firmware, logics, or any combination thereof. Certain aspects can be implemented in hardware, whereas other aspects can be implemented in firmware or software that may be executed by a controller, microprocessor or other computing device. When various aspects of the embodiments of the present disclosure are illustrated or described as block diagrams, flowcharts, or using some other graphical representation, it will be understood that the blocks, apparatuses, systems, techniques, or methods described herein can be implemented in hardware, software, firmware, special-purpose circuits or logics, general-purpose hardware or controllers or other computing devices, or some combination thereof, as non-limiting examples.

For example, the method or apparatus according to the embodiments of the present disclosure can also be implemented by means of an architecture of a computing device 3000 shown in Fig. 11. As shown in Fig. 11, the computing device 3000 may include a bus 3010, one or more CPUs 3020, a read-only memory (ROM) 3030, a random access memory (RAM) 3040, a communication port 3050 connected to a network, an input/output component 3060, a hard disk 3070, and the like. A storage device in the computing device 3000, such as the ROM 3030 or the hard disk 3070, can store various data or files used for the processing and/or communication of the vehicle security authentication method provided by the present disclosure and program instructions executed by the CPU. The computing device 3000 may further include a user interface 3080. Of course, the architecture shown in Fig. 11 is only exemplary. When implementing different devices, one or more components in the computing device shown in Fig. 11 can be omitted according to actual needs.

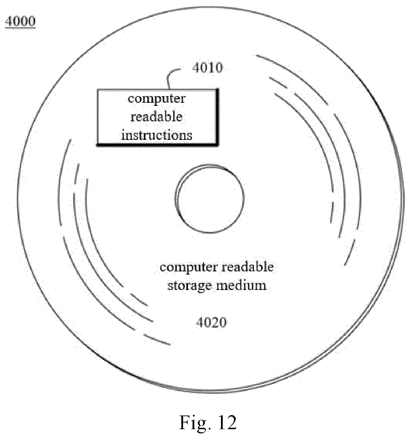

According to yet another aspect of the present disclosure, there is further provided a computer-readable storage medium. Fig. 12 shows a schematic diagram 4000 of a storage medium according to the present disclosure.

As shown in Fig. 12, the computer storage medium 4020 stores computer-readable instructions 4010. When the computer-readable instructions 4010 are executed by a processor, the vehicle security authentication method according to the embodiments of the present disclosure described with reference to the above drawings may be performed. The computer-readable storage medium in the embodiments of the present disclosure may be a volatile memory or a nonvolatile memory, or may include both volatile and nonvolatile memories. The nonvolatile memory may be read-only memory (ROM), programmable read-only memory (PROM), erasable programmable read-only memory (EPROM), electrically erasable programmable read-only memory (EEPROM) or flash memory. The volatile memory may be a random access memory (RAM), which is used as an external cache. By way of illustration but not limitation, many forms of RAM are available, such as static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous link dynamic random access memory (SLDRAM) and direct Rambus random access memory (DR RAM). It should be noted that the memories of the methods described herein are intended to include, but are not limited to, these and any other suitable types of memories. It should be noted that the memories of the methods described herein are intended to include, but are not limited to, these and any other suitable types of memories.

The embodiments of the present disclosure further provide a computer program product or computer program comprising computer instructions stored in a computer-readable storage medium. A processor of a computer device reads the computer instructions from the computer-readable storage medium, and the processor executes the computer instructions to cause the computer device performs the vehicle security authentication method according to the embodiments of the present disclosure.

It should be noted that the flowcharts and block diagrams in the drawings illustrate the possible implementable architectures, functions and operations of the systems, methods and computer program products according to various embodiments of the present disclosure. In this regard, each block in the flowcharts or block diagrams may represent a module, a program segment, or a part of code, which contains at least one executable instruction for implementing a specified logical function. It should also be noted that in some alternative implementations, the functions noted in the blocks may occur in a different order than that noted in the drawings. For example, two blocks shown in succession may actually be executed substantially in parallel, and they may sometimes be executed in a reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

In general, various example embodiments of the present disclosure can be implemented in hardware, or dedicated circuits, software, firmware, logics, or any combination thereof. Certain aspects can be implemented in hardware, whereas other aspects can be implemented in firmware or software that may be executed by a controller, microprocessor or other computing device. When various aspects of the embodiments of the present disclosure are illustrated or described as block diagrams, flowcharts, or using some other graphical representation, it will be understood that the blocks, apparatuses, systems, techniques, or methods described herein can be implemented in hardware, software, firmware, special-purpose circuits or logics, general-purpose hardware or controllers or other computing devices, or some combination thereof, as non-limiting examples.

The exemplary embodiments of the present disclosure described in detail above are only illustrative, not restrictive. It should be understood by those skilled in the art that various modifications and combinations can be made to these embodiments or the features thereof without departing from the principles and spirit of the present disclosure, and such modifications should fall within the scope of the present disclosure.

## Claims

1. A method for operating a vehicle that corresponds to at least one digital vehicle key located in at least one mobile terminal, comprising:
establishing a communication connection between the vehicle and the at least one mobile terminal;
determining senseless operation information corresponding to at least one digital vehicle key in the at least one mobile terminal, wherein the senseless operation information includes one or more of quantity information, location information and trajectory information; and
controlling, based on the senseless operation information corresponding to the at least one digital vehicle key, the vehicle to perform a corresponding operation.

2. The method according to claim 1, wherein the senseless operation information includes quantity information, and the determining senseless operation information corresponding to at least one digital vehicle key in the at least one mobile terminal comprises:
determining the quantity information of mobile terminals within a preset range from the vehicle, and/or determining the quantity information of digital vehicle keys within a preset range from the vehicle.

3. The method according to claim 2, wherein the controlling, based on the senseless operation information corresponding to the at least one digital vehicle key, the vehicle to perform a corresponding operation further comprises:
controlling, in response to a number of the mobile terminals being one, and/or in response to a number of the digital vehicle keys being one, the vehicle to perform an operation corresponding to single user; or
controlling, in response to the number of the mobile terminals being greater than one, and/or in response to the number of the digital vehicle keys being greater than one, the vehicle to perform an operation corresponding to multiple users.

4. The method according to claim 2, wherein the senseless operation information further includes location information,
obtaining, in response to a number of the mobile terminals being greater than one, and/or in response to a number of the digital vehicle keys being greater than one, the location information of the mobile terminals and/or digital vehicle keys,
controlling, in response to the location information indicating that a distance between the mobile terminal and/or the digital vehicle key and the vehicle is less than a preset threshold, the vehicle to perform an operation corresponding to single user;
controlling, in response to the location information indicating that the distance between the mobile terminal and/or the digital vehicle key and the vehicle is greater than a preset threshold, the vehicle to perform an operation corresponding to multiple users.

5. The method according to claim 2, wherein the senseless operation information further includes location information, and the controlling, based on the senseless operation information corresponding to the at least one digital vehicle key, the vehicle to perform a corresponding operation comprises:
obtaining, in response to a number of the mobile terminals being greater than one, and/or in response to a number of the digital vehicle keys being greater than one, the location information of the mobile terminals and/or digital vehicle keys,
controlling, based on the location information, the vehicle to turn on a path navigation function or a location reminder function.

6. The method according to claim 2, wherein the determining the quantity information of mobile terminals within the preset range from the vehicle, and/or determining the quantity information of digital vehicle keys within the preset range from the vehicle comprises:
determining whether a speed of the vehicle is less than a preset threshold;
in response to the speed of the vehicle being less than the preset threshold, determining the quantity information of mobile terminals within the preset range from the vehicle, and/or determining the quantity information of digital vehicle keys within the preset range from the vehicle.

7. The method according to claim 2, wherein the determining the quantity information of mobile terminals within the preset range from the vehicle, and/or determining the quantity information of digital vehicle keys within the preset range from the vehicle comprises:
establishing, by the vehicle, connection with some of the at least one mobile terminal;
establishing, by the vehicle, connection with other some of the at least one mobile terminal by enhancing power of a vehicle-mounted antenna;
obtaining the quantity information of mobile terminals within a coverage range of the enhanced vehicle-mounted antenna and/or obtaining the quantity information of digital vehicle keys within a coverage range of the said vehicle-mounted antenna by the vehicle.

8. The method according to claim 2, wherein,
the establishing a communication connection between the vehicle and the at least one mobile terminal comprises:
establishing, by the vehicle, connection with some of the at least one mobile terminal through a first communication protocol;
establishing, by the vehicle, connection with other some of the at least one mobile terminal through a second communication protocol, wherein the communication range of the second communication protocol is larger than that of the first communication protocol;
the determining the quantity information of mobile terminals within the preset range from the vehicle, and/or determining the quantity information of digital vehicle keys within the preset range from the vehicle comprises:
obtaining the quantity information of mobile terminals establishing connections through the first communication protocol and the second communication protocol and/or obtaining the quantity information of digital vehicle keys interacting through the first communication protocol and the second communication protocol by the vehicle.

9. The method according to claim 1, wherein the senseless operation information includes trajectory information, and the controlling, based on the senseless operation information corresponding to the at least one digital vehicle key, the vehicle to perform a corresponding operation comprises:
controlling, in response to the trajectory information of the at least one digital vehicle key being coincident with a same preset trajectory, the vehicle to perform an operation corresponding to single user;
controlling, in response to the trajectory information of the at least one digital vehicle key being coincident with a plurality of different preset trajectories, the vehicle to perform an operation corresponding to multiple users.

10. The method according to claim 1, wherein the senseless operation information includes trajectory information, and a vicinity of the vehicle includes an effective connection area, a greet area and an unlock area, and the controlling, based on the senseless operation information corresponding to the at least one digital vehicle key, the vehicle to perform a corresponding operation comprises:
determining a duration for which the digital vehicle key is located in the effective connection area of the vehicle based on the trajectory information, and determining whether the vehicle turns on a reminder function based on the duration for which the digital vehicle key is located in the effective connection area of the vehicle; or
determining the duration for which the digital vehicle key is located in the effective connection area of the vehicle and a duration for which the digital vehicle key is located in the greet area of the vehicle based on the trajectory information, and determining whether the vehicle turns on a greet function based on the duration for which the digital vehicle key is located in the effective connection area of the vehicle and the duration for which the digital vehicle key is located in the greet area of the vehicle; or
determining the duration for which the digital vehicle key is located in the greet area of the vehicle and a duration for which the digital vehicle key is located in the unlock area of the vehicle based on the trajectory information, and determining whether the vehicle turns on an unlock function based on the duration for which the digital vehicle key is located in the greet area of the vehicle and the duration for which the digital vehicle key is located in the unlock area of the vehicle.

11. The method according to claim 3 or 4, wherein the operation corresponding to single user includes one or more of: manipulating the vehicle in sports mode, turning on global sound field, turning on front window, adjusting tire pressure, adjusting driver seat, and turning on air conditioner in front row, and the operation corresponding to multiple users includes one or more of: manipulating the vehicle in comfort mode, turning on partitioned sound field, adjusting driver seat, adjusting front passenger seat, adjusting seat in back row, simultaneously opening both front and rear windows, adjusting tire pressure, and turning on air conditioner in front and rear row.

12. A vehicle configured to perform the method according to any of claims 1-11.

13. A mobile terminal comprising at least one digital vehicle key, the digital vehicle key being configured to interact with a vehicle that performs the method according to any of claims **1-11.**

14. A system comprising a vehicle and at least one mobile terminal, wherein the vehicle is configured to perform the method corresponding to claim 1, and the system is further configured to:
establish, by the vehicle, a communication connection with the at least one mobile terminal;
determine, by the vehicle, whether a speed of the vehicle exceeds a preset threshold;
in response to the vehicle determining that the speed of the vehicle is less than the preset threshold, determine a mobile terminal within a preset range from the vehicle among the at least one mobile terminal and determine quantity information corresponding to at least one digital vehicle key in the mobile terminal within the preset range from the vehicle by the vehicle;
control, in response to the quantity information corresponding to the at least one digital vehicle key in the mobile terminal within the preset range from the vehicle indicating that there is one of the at least one mobile terminal being within the preset range from the vehicle, the vehicle to turn on a path navigation function or a location reminder function;
determine, in response to the quantity information corresponding to the at least one digital vehicle key in the mobile terminal within the preset range from the vehicle indicating that there is none of the at least one mobile terminal being within the preset range from the vehicle, number-of-users information corresponding to the at least one digital vehicle key; and
control, in response to the number-of-users information corresponding to the at least one digital vehicle key satisfying a preset number-of-users condition, the vehicle to perform an operation corresponding to the number-of-users condition.

15. A system comprising a vehicle and at least one mobile terminal, wherein the vehicle is configured to perform the method corresponding to claim 1, and the system is further configured to:
establish, by the vehicle, a communication connection with the at least one mobile terminal;
determine, by the vehicle, trajectory information of at least one digital vehicle key in the at least one mobile terminal;
control, in response to the trajectory information of the at least one digital vehicle key indicating that moving trajectories of the at least one digital vehicle keys are each coincident with a same preset trajectory, the vehicle to perform an operation corresponding to single user; and
control, in response to the trajectory information of the at least one digital vehicle key indicating that the moving trajectories of the at least one digital vehicle key are coincident with a plurality of different preset trajectories, the vehicle to perform an operation corresponding to multiple users.

16. A system comprising a vehicle and at least one mobile terminal, wherein the vehicle is configured to perform the method corresponding to claim 1, and the system is further configured to:
establish, by the vehicle, a communication connection with the at least one mobile terminal;
in response to the vehicle determining that authentication of a digital vehicle key of one of the at least one mobile terminal is passed, determine, by the vehicle, whether other mobile terminals of the at least one mobile terminal are located within a preset range from the vehicle;
in response to the vehicle determining that the other mobile terminals are located within the preset distance from the vehicle, determine quantity information of digital vehicle keys of the other mobile terminals, and determine whether the vehicle turns on a path navigation function or a location reminder function based on the quantity information; and
turn on or open, based on the quantity information and trajectory information of the other mobile terminals located within the preset range from the vehicle, a vehicle door, sound field, vehicle window or air conditioner corresponding to the vehicle.

17. A system comprising a vehicle and at least one mobile terminal, wherein the vehicle is configured to perform the method corresponding to claim 1, and the system is further configured to:
establish, by the vehicle, a communication connection with the at least one mobile terminal;
determine trajectory information of at least one digital vehicle key in the at least one mobile terminal and determine a duration for which the digital vehicle key is located in an effective connection area of the vehicle based on the trajectory information by the vehicle; and
determine, by the vehicle, whether the vehicle turns on a horn and a headlight based on the duration for which the digital vehicle key is located in the effective connection area of the vehicle.

18. A computer program product stored on a computer-readable storage medium and comprising computer instructions which, when executed by a processor, cause a computer device to perform the method according to any of claims 1-11.

19. An electronic device, comprising: one or more processors; and one or more memories, wherein the one or more memories have stored thereon computer executable programs which, when executed by the processors, perform the method according to any of claims 1-11.

20. A method for operating a vehicle that corresponds to at least one digital vehicle key located in at least one mobile terminal, comprising:
establishing, by a first mobile terminal, a Bluetooth communication connection with the vehicle;
jointly performing, by a first digital vehicle key in the first mobile terminal, key authentication operation with the vehicle;
triggering a senseless authentication function and determining whether an execution condition for the senseless authentication function has been satisfied by the vehicle;
in response to the execution condition for the senseless authentication function having been satisfied, establishing, by the vehicle, a communication connection with a second mobile terminal, jointly performing, by a second digital vehicle key in the second mobile terminal, key authentication operation with the vehicle, determining, by the vehicle, senseless operation information corresponding to the second digital vehicle key, wherein the senseless operation information includes one or more of quantity information, location information and trajectory information, and controlling, based on the senseless operation information corresponding to the second digital vehicle key, the vehicle to perform a corresponding operation;
in response to the execution condition for the senseless authentication function having not been satisfied, synchronizing, by the vehicle, a senseless authentication event with the first mobile terminal;
transmitting, by the vehicle, the senseless authentication event and an execution result to the first mobile terminal or the second mobile terminal through the Bluetooth communication connection; and
displaying or broadcasting, by the first mobile terminal or the second mobile terminal, the execution result of the senseless authentication event.

21. A method of operating a vehicle that corresponds to a first digital vehicle key or a second digital vehicle key, the first digital vehicle key being located at a first mobile terminal and the second digital vehicle key being located at a second mobile terminal, the method comprising:
triggering, by the first mobile terminal, a vehicle remote control function;
initiating a remote control authentication request and determining that a Bluetooth connection has been established between the first mobile terminal and the vehicle and key authentication is successfully completed by the first mobile terminal;
generating, by the first mobile terminal, a vehicle control instruction;
transmitting, by the first mobile terminal, a vehicle remote control request including the vehicle control instruction to the vehicle through Bluetooth connection;
receiving the vehicle remote control request, parsing the vehicle control instruction and determining that an execution condition of the vehicle control instruction has been satisfied by the vehicle;
establishing, by the vehicle, a communication connection with the second mobile terminal,
jointly performing, by the second digital vehicle key in the second mobile terminal, key authentication operation with the vehicle, and determining, by the vehicle, senseless operation information corresponding to the second digital vehicle key, wherein the senseless operation information includes one or more of quantity information, location information and trajectory information;
controlling, based on the senseless operation information corresponding to the second digital vehicle key, the vehicle to perform a corresponding operation;
transmitting, by the vehicle, an execution result of the operation to the first mobile terminal or the second mobile terminal through a Bluetooth communication connection;
displaying or broadcasting, by the first mobile terminal or the second mobile terminal, the execution result of the operation.

22. A method of operating a vehicle that corresponds to a first digital vehicle key or a second digital vehicle key, the first digital vehicle key being located at a first mobile terminal and the second digital vehicle key being located at a second mobile terminal, the method comprising:
establishing, by the first mobile terminal, a Bluetooth communication connection with the vehicle;
notifying, by the vehicle, the first mobile terminal that the Bluetooth communication connection has been successfully established and that the usage state of the first digital vehicle key is normal;
performing, by the vehicle, quick authentication with the first mobile terminal;
in response to a failure of quick authentication, performing, by the vehicle, standard authentication with the first mobile terminal,
in response to a failure of standard authentication and an error reason being an unknown identifier of the first digital vehicle key, obtaining friend key authentication information from the first mobile terminal and verifying a signature in the friend key authentication information with a public key of a main digital vehicle key of the vehicle by the vehicle, and in response to the verification of the signature being passed, saving a public key of the first digital vehicle key in the friend key authentication information and verifying a signature transmitted by the first mobile terminal with the public key of the first digital vehicle key by the vehicle;
in response to a failure of standard authentication and an error reason being not the unknown identifier of the first digital vehicle key, determining that an authentication between the first mobile terminal and the vehicle has failed;
in response to a success of quick authentication or a success of standard authentication or the signature of the first mobile terminal being passed, establishing a secure information channel with the first mobile terminal and obtaining service data of the first digital vehicle key by the vehicle;
performing, by the first mobile terminal, Bluetooth ranging and positioning operation with the vehicle;
jointly performing, by the vehicle, the first mobile terminal and the second mobile terminal, a first operation or a second operation;
wherein the first operation includes: triggering a senseless authentication function and determining whether an execution condition of the senseless authentication function has been satisfied by the vehicle; in response to the execution condition of the senseless authentication function having been satisfied, establishing, by the vehicle, a communication connection with the second mobile terminal, jointly performing, by the second digital vehicle key in the second mobile terminal, key authentication operation with the vehicle, determining, by the vehicle, senseless operation information corresponding to the second digital vehicle key, wherein the senseless operation information includes one or more of quantity information, location information and trajectory information, and controlling, based on the senseless operation information corresponding to the second digital vehicle key, the vehicle to perform a corresponding operation; in response to the execution condition of the senseless authentication function having not been satisfied, synchronizing, by the vehicle, a senseless authentication event with the first mobile terminal; transmitting, by the vehicle, the senseless authentication event and an execution result to the first mobile terminal or the second mobile terminal through the Bluetooth communication connection; displaying or broadcasting, by the first mobile terminal or the second mobile terminal, the execution result of the senseless authentication event;
wherein the second operation includes: triggering, by the first mobile terminal, a vehicle remote control function; initiating a remote control authentication request, and determining that a Bluetooth connection has been established between the first mobile terminal and the vehicle and key authentication is successfully completed by the first mobile terminal; generating, by the first mobile terminal, a vehicle control instruction; transmitting, by the first mobile terminal, a vehicle remote control request including the vehicle control instruction to the vehicle through the Bluetooth connection; receiving the vehicle remote control request, parsing the vehicle control instruction and determining that an execution condition of the vehicle control instruction have been satisfied by the vehicle; establishing, by the vehicle, a communication connection with the second mobile terminal, jointly performing, by the second digital vehicle key in the second mobile terminal, key authentication operation with the vehicle, and determining, by the vehicle, senseless operation information corresponding to the second digital vehicle key, wherein the senseless operation information includes one or more of quantity information, location information and trajectory information; controlling, based on the senseless operation information corresponding to the second digital vehicle key, the vehicle to perform a corresponding operation; transmitting, by the vehicle, an execution result of the operation to the first mobile terminal or the second mobile terminal through the Bluetooth communication connection; displaying or broadcasting, by the first mobile terminal or the second mobile terminal, the execution result of the operation.
